# EUROPEAN PATENT APPLICATION

(11) **EP 4 601 154 A1**
(43) Date of publication of application: **13.08.2025**
(21) Application number: 25154845.9
(22) Date of filing: 30.01.2025
(51) Int. Cl.: H02J 7/00, H04R 25/00

(54) **A METHOD FOR CONFIGURING A CHARGING PROFILE OF A BATTERY OF EACH OF A PAIR OF HEARING AIDS, AND A RELATED HEARING SYSTEM**

(30) Priority: 06.02.2024 EP 24156082
(71) Applicant: Oticon A/S, 2765 Smørum (DK)
(72) Inventor: CHRISTENSEN, Jess, DK-2765 Smørum (DK); SIGURDSSON, Atli Gilbert, DK-2765 Smørum (DK); RIEMER, Lars, DK-2765 Smørum (DK)
(74) Representative: Demant

(57) **Abstract**

Disclosed is a method for configuring a charging profile of a battery of each of a pair of hearing aids, the at least two hearing aids being of the same type. The battery of each of the pair hearing aids is characterized by a battery model, the battery model of each of the pair of hearing aids being different from one another. The method comprises obtaining, for each of the pair of hearing aids, a charging configuration indicative of the charging profile of the battery. The charging configuration comprises at least a first current reference value, a first voltage reference value, a first target value, and a second current reference value. Obtaining the charging configuration comprises determining an operating window comprising a plurality of initial charging configurating points associated with a coulombic efficiency greater than or equal to a threshold. Each of the plurality of initial charging configuration points being indicative of a current value, a voltage value, and a temperature value. Determining the operating window comprises performing, for the temperature value, an iterative charging and discharging procedure based on a maximum voltage value and a maximum current value. Obtaining the charging configuration comprises selecting an initial charging configuration point from the operating window based on a first target value and a charging time. The first current reference value is the current value of the selected initial charging configuration point. Obtaining the charging configuration comprises determining the first voltage reference value based on the first current reference value and the first target value. Obtaining the charging configuration comprises determining the second current reference value based the maximum current value. The method comprises performing, for each of the pair of hearing aids, a first charging procedure based on the respective charging configuration.

## Description

### TECHNICAL FIELD

The present application relates to the field of hearing aids with rechargeable batteries. The present application relates to a method for configuring a charging profile of a battery of each of a pair of hearing aids., and a related hearing system.

### BACKGROUND

Recharging Lithium-ion (Li-Ion) batteries for electronic devices may take a long time, time where an electronic device cannot be used optimally. One option to lower the charging time can be to increase a charging current being supplied to the electronic device. However, such increase can cause greater wear and tear on the battery, in turn leading to a reduced lifespan (e.g., service life) of the electronic device.

There is a need for charging procedures enabling fast charging of a battery, while not wearing the batteries out.

### SUMMARY

### A method:

Disclosed is a method for configuring a charging profile of a battery of each of a pair of hearing aids (e.g., two electronic devices). The battery of each of the pair of hearing aids is characterized by a battery model. The battery model of each of the pair hearing aids is different from one another. The pair of hearing aids are of the same type.

The pair of hearing aids may form a binaural hearing system.

The method comprises obtaining, for each of the pair of hearing aids, a charging configuration indicative of the charging profile (e.g., characteristic) of the respective battery. The charging configuration comprises at least a first current reference value, a first voltage reference value, a first target value, and a second current reference value,

The charging configuration comprises at least a first current reference value, a first voltage reference value, and a second current reference value.

Obtaining the charging configuration comprises determining an operating window comprising a plurality of initial charging configurating points associated with a coulombic efficiency greater than or equal to a threshold. Each of the plurality of initial charging configuration points is indicative of a current value, a voltage value, and a temperature value.

Determining the operating window comprises performing, for the temperature value, an iterative charging and discharging procedure based on a maximum voltage value and a maximum current value. Obtaining the charging configuration may comprise obtaining the temperature value.

Optionally, obtaining the charging configuration may comprises obtaining one or more temperature values. For example, determining the operating window can comprise performing, for each of the one or more temperature values, an iterative charging and discharging procedure based on a maximum voltage value and a maximum current value.

Obtaining the charging configuration comprises selecting an initial charging configuration point from the operating window based on a first target value and a charging time. The first target value is indicative of an amount of charge or energy required by the respective hearing aid for a day of use. The charging time is indicative of a time required to charge the respective hearing aid for the day of use. A day of use may comprise 14 to 18 hours (e.g., 14, 15, 16, 17, or 18 hours).

The first current reference value is the current value of the selected initial charging configuration point.

Obtaining the charging configuration comprises determining the first voltage reference value based on the first current reference value and the first target value.

Obtaining the charging configuration comprises determining the second current reference value based the maximum current value. The operating window comprises the second current reference value.

The method comprises performing, for each pair of hearing aids, a first charging procedure based on the respective charging configuration. Performing the first charging procedure comprises applying a charging current to the battery of the respective hearing aid based on the first current reference value. The charging current is constant. Applying the charging current to the battery causes an increase in a voltage of the battery.

Performing the first charging procedure comprises determining whether the voltage of the battery of the respective hearing aid meets the first voltage reference value. Performing the first charging procedure comprises, upon determining that the voltage meets the first voltage reference value, maintaining the voltage of the battery at the first voltage reference value by controlling the charging current until the charging current meets the second current reference value.

In one or more example methods, the method can be used for configuring a charging profile of a battery of each of at least two hearing aids intended to be charged (e.g., for testing purposes).

In one or more example methods, each of the pair of hearing aids may be intended to be charged when the battery level of the respective battery is below a threshold (e.g., running out of power). In one or more example methods, a user of the pair of hearing aids can initiate a charging procedure by connecting the respective hearing aid to a power supply. For example, the method can comprise determining that a power supply is connected to the each of the pair of hearing aids or to a respective hearing aid of the pair of hearing aids.

In one or more example methods, the pair of hearing aids are identical to each other except for the battery (e.g., the component and/or unit) and/or the battery model. In other words, the pair of hearing aids being of the same type may be construed as a pair of hearing aids comprising the same structure (such as same components) except for the battery model and/or the battery (e.g., the component). For example, the pair of hearing aids comprise different battery models, such as batteries from different manufacturers and/or vendors. For example, the pair of hearing aids comprise different batteries (e.g., structurally).

In one or more example methods, obtaining the charging configuration comprises obtaining a temperature value, one or more temperature values, or a range of temperature values. For example, the temperature value (e.g., or the one or more temperature values) can be selected from a range of temperatures of 15-35 degrees Celsius. For example, a temperature to be used for such initialization procedure can be 15 degrees Celsius. The method may comprise selecting the temperature value from the range of temperatures based on the hearing aid type of the pair of hearing aids and/or the intended use of such pair of hearing aids.

For example, the operating window of each of the pair of hearing aids is related to the battery electrochemical system of the respective hearing aid of the pair of hearing aids.

For example, the first target value can comprise a first charge capacity target (e.g., indicating an amount of charge (in mAh) required by the respective hearing aid for a day of use). For example, the first target value can comprise a first energy target (e.g., indicating an amount of energy (in mWh) required by the respective hearing aid for a day of use).

In one or more example methods, the iterative charging and discharging procedure can be seen as a coulomb counting technique (e.g., by measuring the charge that goes in and out of the battery of the respective hearing aid during a charge-discharge cycle, such as for calculating the battery of the respective hearing aid).

In one or more example methods, each of the plurality of initial charging configuration points are associated with a coulombic efficiency greater than or equal to a threshold (such as, initial charging configuration points allowing the battery of each of the pair of hearing aids to not experiencing or experiencing minor lithium plating, e.g., minor electrolyte decomposition). An initial charging configuration point having a coulombic efficiency greater than or equal to the threshold may be construed as a current value, a voltage value, and a temperature value allowing an efficient performance of the battery of the pair of hearing aids with minimal energy loss during a charge-discharge cycle. The threshold may be one or more of: 98%, 99%, and 100%. The threshold may be a range between 98%-100% or 99%-100%.

In one or more example methods, a charging configuration can include parameters characterizing operating conditions of the battery. In one or more example methods, a charging configuration may include charging characteristics specified by the manufacturer of the respective hearing aid and/or the manufacturer of the battery of the respective hearing aid (e.g., nominal and/or maximum charging characteristics of a battery).

In one or more example methods, a charging configuration can be seen as a charging profile of the battery and/or the hearing aid (e.g., electronic device). For example, a charging profile can be characterized by at least a current reference value and a voltage reference value. A voltage reference value may be seen as a reference voltage of the hearing aid, e.g., either specified by the manufacturer (e.g., of the respective hearing aid and/or of the battery of the respective hearing aid) or adjusted based on an initial voltage reference value, the initial voltage reference value being provided by the manufacturer(e.g., of the respective hearing aid and/or of the battery of the respective hearing aid). A current reference value may be seen as a maximum current value that can be handled by the battery of the hearing aid. A current reference value may be seen as a reference current of the hearing aid, e.g., either specified by the manufacturer (e.g., of the respective hearing aid and/or the manufacturer of the battery of the respective hearing aid) or adjusted based on an initial current reference value, the initial current reference value being provided by the manufacturer (e.g., of the respective hearing aid and/or of the battery of the respective hearing aid). For example, the first current reference value can be a pre-determined value. For example, the first voltage reference value can be a pre-determined value.

In one or more example methods, the first current reference value and the first voltage reference value may not be a reference current and/or a reference voltage specified by the manufacturer of the respective hearing aid and/or of the battery of the respective hearing aid.. For example, the method can comprise establishing the first current reference value and/or the first voltage reference value so that the battery of a hearing aid of the pair of hearing aids can have a higher charging performance similarity to the battery of the other hearing aid of the pair of the hearing aids, the batteries of such pair of hearing aids being from a different vendor and/or manufacturer. In one or more example methods, the charging current applied to the battery of the respective hearing aid based on the first current reference value exceeds a maximum charging current (e.g., a charging current that is suitable for the battery to be fully charged) used in a classic charging procedure CC-CV.

In one or more example methods, the first voltage reference value can be chosen so that the battery of a hearing aid of the pair of hearing aids can have a higher charging performance similarity to the battery of the other hearing aid of the pair of hearing aids, the batteries of such pair of hearing aids being from a different vendor and/or manufacturer. In one or more example methods, the first current voltage reference value can be chosen so that the battery of a hearing aid of the pair of hearing aids can have a higher charging performance similarity to the battery of the other hearing aid of the pair of hearing aids, the batteries of such pair of hearing aids being from a different vendor and/or manufacturer. In other words, the first voltage reference value and the first current reference value can be determined in such a way that the difference between a charging behaviour of the battery of a hearing aid of pair of hearing aids and a charging behaviour of the battery of other hearing aid of the pair of hearing aids is minimized. For example, the present disclosure provides determination of an operating window comprising a plurality of initial charging configurating points, the one or more initial charging configuration points being associated with a coulombic efficiency lower than a threshold, together with a charging procedure capable of matching charging behaviours of different battery types (such as of the batteries of the pair of hearing aids). For example, the determination of the operating window for each of the pair of hearing aids allow a proper determination (e.g., selection) of the first current reference value by selecting an initial charging configuration point from the one or more initial charging configuration points based on the first target value and the charging time. For example, the determination of the operating window for each of the pair of hearing aids allow a proper determination (e.g., selection) of the first voltage reference value by determining the first voltage reference value based on the first current reference value and the first target value.

In one or more example methods, determining the first voltage reference values comprises applying a charging current based on the first current reference value to the battery of the respective hearing of the pair of hearing aids until the charge capacity of the battery of the respective meets the first target value (e.g., the first charge capacity target). In one or more example methods, determining the first voltage reference values comprises applying a charging current based on the first current reference value to the battery of the respective hearing of the pair of hearing aids until the energy of the battery meets the first target value (e.g., the first energy target). For example, the method comprises determining the first voltage reference value as the voltage of the battery of the respective hearing aid when the charge capacity or the energy of the battery meets the first target value.

In one or more example methods, the second reference current value can be seen as the current value that allows the battery of the respective hearing aid of the pair of hearing aids to be fully charged. In one or more example methods, the operating window comprises the second reference current value as such it is required that such current value withing the operating window for the battery electrochemical system of the respective hearing aid of the pair of hearing aids to be viable.

In one or more example methods, the first current reference value of a hearing aid of the pair of hearing aids is the same as the first current reference value of other hearing aid of the pair of hearing aids when the first target value is first charge capacity target, such as when the first target value indicates an amount of charge required by a hearing aid for a day of use.

In one or more example methods, the first current reference value of a hearing aid of the pair of hearing aids is different from the first current reference value of other hearing aid of the pair of hearing aids when the first target value comprises a first energy target, such as when the first target value indicates an amount of energy required by a hearing aid for a day of use.

In one or more example methods, the method comprises performing the first charging procedure based on the first current reference value and the first voltage reference value. **In** one or more example methods, the first charging procedure is a constant current constant voltage (CC-CV) charging procedure. In other words, the method may comprise performing a first CC-CV charging procedure. The first CC-CV charging procedure may include a first CC charging phase and a first CV charging phase. Stated differently, the first CC-CV charging procedure may include a first CC charging procedure and a first CV charging procedure.

In one or more example methods, a CC charging phase comprises charging a rechargeable battery at a constant current, e.g., at a constant charging current. Put differently, performing a CC charging procedure may comprise supplying (e.g., applying) a charging current to the battery. For example, applying the charging current to the battery comprises charging the battery using the charging current. The charging current to be applied may be determined based on the first current reference value. In other words, the method can comprise supplying the charging current to the battery in such a way that it matches (e.g., approximately) the first current reference value, e.g., matches the charging characteristics and/or specifications of the battery. In one or more example methods, applying a constant charging current to the battery based on the first current reference value allow preventing an overcurrent charge situation. **In** other words, applying a constant charging current to the battery based on the first current reference value may allow charging the battery with a charging current that is adapted to its specifications, e.g., manufacturer specifications.

In one or more example methods, the charging current may comprise minor fluctuations over charging time, e.g., during the first CC charging phase. In other words, the charging current may be substantially constant and/or approximately constant. In one or more example methods, the charging current comprising minor fluctuations can be construed as constant. In one or more example methods, applying the charging current to the battery, the charging current being substantially constant, may be seen as a CC charging procedure at a current reference value, e.g., at the first current reference value. For example, applying the charging current to the battery, the charging current being substantially constant, can be construed as the first CC charging procedure. In one or more example methods, the charging current can be construed as a current at which the battery of the electronic device is initially charged under a CC charging procedure, e.g., before transitioning into a CV charging procedure. In one or more example methods, the charging current supplied to the battery can be seen as a first charging current, e.g., a current at which the battery of the electronic device is initially charged under the first CC charging procedure.

In one or more example methods, applying the charging current to the battery includes an increase in the voltage of the battery. In other words, applying the charging current to the battery allows the battery to be charged at a higher charging current, e.g., higher than the charging current supplied to the battery in a CV charging phase and/or in a following charging procedure (e.g., a second charging procedure).

In one or more example methods, the voltage of the battery can be construed as a voltage that the battery is charged to when charged to a first capacity level, e.g., to a first quantity of electric charge accumulated (e.g., stored) during the first CC charging procedure. The first capacity level may be less than the full capacity of the battery, e.g., between 50%-70% of the full capacity of the battery.

In one or more example methods, determining whether the voltage of the battery meets the first voltage reference value comprises determining that the voltage of the battery meets the first voltage reference value. For example, a voltage of the battery approximately (e.g., roughly) meeting the first voltage reference value is construed as meeting the first voltage reference value. For example, a voltage of the battery that differs within a range of 0.05%-1.5% from the first voltage reference value is construed as meeting the first voltage reference value.

In one or more example methods, the method comprises, upon determining that the voltage meets the first voltage reference value, maintaining the voltage of the battery at the first voltage reference value. In one or more example methods, the first voltage reference value can be seen as the voltage that the battery is charged to when charged to the first capacity level. In one or more example methods, the first voltage reference value can be seen as the voltage that the battery is charged to when being supplied with the first charging current.

In one or more example methods, determining that the voltage of the battery meets the first voltage reference value can be seen as a condition to perform a CV charging procedure. In one or more example methods, maintaining the voltage of the battery at the first voltage reference value can be seen as a CV charging procedure at a voltage reference value, e.g., at the first voltage reference value. In one or more example methods, the method comprises performing a first CV charging procedure. For example, the first CV charging procedure can be seen as a CV charging phase of the first charging procedure. In one or more example methods, a CV charging phase comprises charging a rechargeable battery at a constant voltage. For example, performing a CV charging procedure may comprise supplying (e.g., applying) a charging current that varies over time (e.g., the charging time) to the battery. For example, performing a CV charging procedure may comprise supplying (e.g., applying) a charging current that gradually decreases in relation to the first current reference value.

In one or more example methods, the voltage of the battery is maintained at the first voltage reference value by controlling the charging current until the charging current meets the second current reference value. In one or more example methods, the method comprises controlling the charging current based on the voltage of the battery, with the voltage of the battery being maintained at the first voltage reference value. For example, the voltage of the battery can be the same as the first voltage reference value and/or approximately the first voltage reference value.

In one or more example methods, controlling the charging current based on the voltage of the battery (e.g., and/or the first voltage reference value) comprises decreasing the charging current supplied to the battery. For example, controlling the charging current based on the voltage of the battery (e.g., and/or the first voltage reference value) causes a smooth decrease in the charging current over time. In other words, controlling the charging current based on the voltage of the battery allows for the charging current to gradually decrease (e.g., over time) during the first CV charging procedure. For example, a gradually increased charging speed is provided to the battery by controlling the charging current based on a constant voltage.

In one or more example methods, the method comprises maintaining the voltage of the battery at the first voltage reference value until the end of the first charging procedure, e.g., until the end of the first CV charging procedure. In other words, the charging current meets the second current reference value at the end of the first charging procedure, e.g. until the end of the first CV charging procedure.

In one or more example methods, determining whether the voltage of the battery meets the first voltage reference value comprises determining that the voltage of the battery does not meet the first voltage reference value. In one or more example methods, the method comprises, upon determining that the voltage does not meet the first voltage reference value, applying the charging current to the battery based on the first current reference value. In other words, the method comprises carry on supplying the charging current to the battery based on the first current reference value. In one or more example methods, the method comprises, upon determining that the voltage does not meet the first voltage reference value, determining whether the voltage of the battery meets the first voltage reference value. Put differently, the method may comprise applying the charging current to the battery until determining that the voltage of the battery meets the first voltage reference value.

In one or more example methods, determining that the voltage of the battery meets the first voltage reference value can be seen as a condition to perform the first CV charging procedure (e.g., to switch from the first CC charging procedure to the first CV charging procedure). In one or more example methods, determining that the voltage of the battery does not meet the first voltage reference value can be seen as a condition to continue performing the first CC charging procedure. In one or more example methods, determining that the charging current meets the second current reference value can be seen as a condition to initiate a second charging procedure.

Embodiments of the present disclosure can advantageously provide a charging procedure capable of balancing charging times between two or more hearing aids and/or a pair of hearing aids (e.g., electronic devices) with batteries from difference vendors (e.g., a pair of hearing aids). Uneven charging times in a pair of hearing aids may be interpreted by the user of such pair of hearing aids as an error, resulting in an unnecessary service call. In other words, uneven charging in a pair of identical hearing aids or in at least two identical hearing aid (e.g., comprising the same components with exception to the battery model, e.g., operating on different battery models) can be experienced by the user as a lack of quality and in some cases causes doubt about the system operating correctly. Embodiments of the present disclosure can then advantageously provide a charging procedure in combined with an initialization procedure (e.g., the iterative charging and discharging procedure) capable of ensuring charging uniformity between battery (e.g., cell) models of at least two hearing aids by tailoring charge profiles using a two-step CC-CV charging procedure or a n-step CC-CV charging procedure (e.g., with more than 2 steps). In particular, by selecting an initial charging configuration point from the one or more initial charging configuration points common to the at least two hearing aids (with the first current reference value and the first voltage reference value being set to the current and voltage value of the selected initial charging configuration point) together with controlling the first voltage reference value and the first current reference value in conjunction with a gradual decent of the charging current to the second current reference value second can ensure harmonization of the charging procedure between two devices with rechargeable batteries (e.g., a pair of hearing aids) while providing for a fast-charging functionality. For example, a fast-charging functionality can be provided during the first charging procedure (e.g., the first CC charging procedure and the first CV charging procedure). In other words, the gradual decrease on the charging current during the first CV charging procedure can minimize the difference between a charging behaviour (e.g., charging pattern) of two or more electronic devices. The two or more hearing aids may be electronic devices intended to be used together for a specific end, e.g., intended to be charged at the same time. Embodiments of the present disclosure can allow for uniformization of the charging procedure of two or more hearing aids, in turn allowing the two or more hearing aids to be charged approximately on the same time. Embodiments of the present disclosure can be particularly useful for two or more hearing aids comprising rechargeable batteries, the rechargeable batteries being from different manufacturers (e.g., with different specifications), that are intended to be used together and thus preferably charged at the same time.

Embodiments of the present disclosure may, in order to ensure charging uniformity between the at least two hearing aids (e.g., a pair of hearing aids running on batteries from different manufacturers), enable adjustment of charging currents and target charging voltages in multiple charging steps, resulting in identical charge capacity or -energy over time.

Embodiments of the present disclosure allows charging the battery of a respective hearing aid of the at least two hearing aid in a faster manner while ensuring less degradation of the battery over time. For example, maintaining the voltage of the battery at the first voltage reference value (e.g., charging the battery at a constant voltage) can prevent overcharging situations. In other words, maintaining the voltage of the battery at the first voltage reference value can prevent a power supply from supplying excessive voltage. In other words, maintaining a lower charging current when the voltage of the battery is below the first voltage reference value can prevent a power supply from supplying excessive voltage. In other words, the voltage and the charging current of the battery is maintained at levels (e.g., at the first voltage reference value, the first current reference value) that are adapted to the charging specifications of the battery and/or the electronic device, thereby extending the lifespan of the battery.

Embodiments of the present disclosure can advantageously extend the lifespan of the battery, in turn extending the lifespan and overall performance of the electronic device incorporating the battery. The present application can extend the lifespan of the battery by solely performing a fast-charging procedure when required, e.g., only when the battery of the respective hearing aid is below the threshold, e.g., when the battery of the electronic device is running out of power.

Embodiments of the present disclosure can ensure uniformity between two or more hearing aids while allowing the battery of each hearing aid to be charged in a faster manner, the faster manner not being the fastest charging mode allowed by the electronic device. In other words, the charging speed of the battery gradually increases over charging time, thus extending the lifespan of the battery.

Embodiments of the present disclosure advantageously can allow charging the battery of the respective hearing aid in a faster manner, however not charging as fast as the electronic device can.

Embodiments of the present disclosure can allow extension of the lifespan of batteries, while being able to ensure harmonization of the charging procedure between two or more electronic devices, each hearing aid comprising a battery from a different manufacturer, e.g., with different specifications.

Embodiments of the present disclosure advantageously provides for a seamless application of the disclosed method in the hearing aid as the hearing aid can use existing hardware (e.g., an existing processor) for performing such charging procedure.

In one or more example methods, the charging configuration further comprises a second voltage reference value, and a second target value indicative of an amount of charge or energy required by the respective hearing aid to be fully charged (e.g., a state of health, SOH, of the battery). In one or more example methods the method comprises performing, each of the pair of hearing aids, a second charging procedure based on the charging configuration.

In one or more example methods, the first and second charging procedure are performed for the temperature value or a temperature value selected from a range of temperatures.

In one or more example methods, the charging configuration comprises one or more of: the first voltage reference value, the first current reference value, the second voltage reference value, the second current reference value, the first target value, and the second target value.

In one or more example methods, the second voltage reference value can be seen as a reference voltage of the electronic device adjusted based on the second target value. In one or more example methods, the adjustment of the second voltage reference value can be performed before obtaining the charging configuration. In one or more example methods, the adjustment of the second voltage reference value can be performed after obtaining the charging configuration. For example, the second voltage reference value can be adjusted based on the second target value, the second target value being comprised in the charging configuration.

In one or more example methods, the second current reference value can be seen as a maximum current value that is applied to the battery of a respective hearing aid of the pair of hearing aids when the voltage of the respective battery is above the first voltage reference value, e.g., in form of a charging current. For example, the second current reference value is dependent on the second voltage reference value. In other words, the second current reference value may be adjusted based on the adjusted second voltage reference value. In one or more example methods, the second current reference can be adjusted before obtaining the charging configuration. In one or more example methods, the second current reference can be determined before performing the second charging procedure, e.g., based on the adjusted second voltage reference value. In one or more example methods, the second current reference value may be lower than a reference value provided by the vendor of the battery (e.g., a maximum rating). Having the second current reference value lower than a reference value provided by the vendor of the battery provides for a reduction in battery degradation and/or harmonization of charging times of other battery types.

In one or more example methods, the second target value is indicative of the SOH of the battery. In one or more example methods, the SOH of a battery can be seen as a measure of the overall health and performance of a battery over time. In one or more example methods, the SOH of a battery is the ratio of a currently maximum capacity of the battery to a rated capacity (e.g., initial full capacity). For example, the second target value is indicative of an amount of charge or energy required by the respective hearing aid to be fully charged. The second target value may be a second charge capacity target or a second energy target. In one or more example methods, the second target value is a pre-determined value. In one or more example methods, the memory of the each of the pair of hearing aids comprises the respective second target value.

In one or more example methods, the method comprises performing the second charging procedure based on the second voltage reference value, the second current reference value, and the target value. In one or more example methods, the second charging procedure is a CC-CV charging procedure. In other words, the method may comprise performing a second CC-CV charging procedure. The second CC-CV charging procedure may include a second CC charging phase and a second CV charging phase. Stated differently, the second CC-CV charging procedure may include a second CC charging procedure and a second CV charging procedure.

Embodiments of the present disclosure can allow extension of the lifespan of the battery by performing the second charging procedure based on the second current reference value, the second voltage reference value, and the target value. In other words, applying a charging current to the battery based on the second current reference comprises performing the second CC charging procedure at a charging current adapted to the requirements of the battery, e.g., adapted to the SOH of the battery. For example, the battery can be supplied with a higher constant charging current, e.g., higher than the second current reference. However applying such higher charging current to the battery may lead to an increase in the degradation of the battery over time. Embodiments of the present disclosure provide for a charging procedure capable of extending the lifespan of the battery as the second current reference value is adjusted to the SOH of the battery.

In one or more example methods, performing the second charging procedure comprises determining that the charging current meets the second current reference value.

In one or more example methods, the method comprises determining whether the charging current meets the second current reference value. In one or more example methods, determining whether the charging current meets the second current reference value comprises determining that the charging current does not meet the second current reference value. In one or more example methods, the method comprises, upon determining that the charging current does not meet the second current reference value, maintaining the voltage of the battery at the first voltage reference value by controlling the charging current until the charging current meets the second current reference value. In one or more example methods, the method comprises, upon determining that the current does not meet the second current reference value, determining whether the charging current meets the second current reference value. In other words, the method may comprise maintaining the voltage of the battery at the first voltage reference value until determining that the charging current meets the second current reference value. In one or more example methods, determining that the charging current does not meet the second current reference value can be seen as a condition to continue performing the first CV charging procedure.

In one or more example methods, determining whether the charging current meets the second current reference value comprises determining that the charging current meets the second current reference value. In one or more example methods, determining that the charging current meets the second current reference value can be seen as a condition for initiating (e.g., and/or performing) the second charging procedure. In one or more example methods, determining that the charging current meets the second current reference value can be seen as a condition to perform the second CC charging procedure (e.g., to switch from the first CV charging procedure to the second CC charging procedure).

In one or more example methods, performing the second charging procedure comprises, upon determining that the charging current meets the second current reference value, applying the charging current to the battery based on the second current reference value. In one or more example methods, the charging current is constant.

In one or more example methods, the method comprises performing the second CC charging procedure. In one or more example methods, performing the second CC charging procedure comprises charging the battery at a constant current, e.g., at a constant charging current. In one or more example methods, the method comprises supplying the charging current to the battery in such a way that it matches (e.g., approximately) the second current reference value, e.g., matches the charging characteristics of the battery.

In one or more example methods, the charging current may comprise minor fluctuations over charging time, e.g., during the second CC charging phase. In other words, the charging current may be substantially constant and/or approximately constant. In one or more example methods, the charging current comprising minor fluctuations can be construed as constant. In one or more example methods, the charging current supplied to the battery can be seen as a second charging current, e.g., a current at which the battery of the electronic device is charged under the second CC charging procedure, e.g., after a first charging procedure, e.g., after a first CC-CV charging procedure. In one or more example methods, applying the charging current to the battery causes an increase in the voltage of the battery. In one or more example methods, applying the charging current to the battery includes an increase in the voltage of the battery. In one or more examples, applying a charging current to the battery under the first CC charging procedure causes a greater increase in the voltage of the battery than in the voltage of the battery under the second CC charging procedure. In other words, the first charging current may be higher than the second charging current. The battery may be charged to a second capacity level, e.g., to a second quantity of electric charge accumulated during the second CC charging procedure. For example, the second capacity level is lower than or equal to the full capacity of the battery. For example, the second capacity level is higher than the first capacity level, e.g., between 50%-100% of the full capacity of the battery. For example, the second capacity level can be between 75%-85% of the full capacity of the battery.

In one or more example methods, performing the second charging procedure comprises determining whether the voltage meets the second voltage reference value.

In one or more example methods, determining whether the voltage of the battery meets the second voltage reference value comprises determining that the voltage of the battery does not meet the second voltage reference value. In one or more example methods, the method comprises, upon determining that the voltage of the battery does not meet the second voltage reference value, applying the charging current to the battery based on the second current reference value. In other words, the method comprises carry on supplying the charging current to the battery based on the second current reference value. In one or more example methods, the method comprises, upon determining that the voltage of the battery does not meet the second voltage reference value, determining whether the voltage of the battery meets the second voltage reference value. Stated differently, the method may comprise applying the charging current to the battery until determining that the voltage of the battery meets the second voltage reference value. In one or more example methods, determining that the voltage of the battery does not meet the second voltage reference value can be seen as a condition to continue performing the second CC charging procedure.

In one or more example methods, determining whether the voltage of the battery meets the second voltage reference value comprises determining that the voltage of the battery meets the second voltage reference value. For example, a voltage of the battery approximately (e.g., roughly) meeting the second voltage reference value is construed as meeting the second voltage reference value. For example, a voltage of the battery that differs within a range of 2%-5% from the second voltage reference value is construed as meeting the first voltage reference value. In one or more example methods, determining that the voltage meets the second voltage reference value can be seen as a condition to perform the second CV charging procedure (e.g., to switch from the second CC charging procedure to the second CV charging procedure).

In one or more example methods, performing the second charging procedure comprises, upon determining that the voltage meets the second voltage reference value, maintaining the voltage of the battery at the second voltage reference value.

In one or more example methods, the second voltage reference value can be seen as the voltage that the battery is charged to when charged to the second capacity level. In one or more example methods, the second voltage reference value can be seen as the voltage that the battery is charged to when being supplied with the second charging current. In one or more example methods, maintaining the voltage of the battery at the second voltage reference value can be seen as a CV charging procedure at a voltage reference value, e.g., at the second voltage reference value.

In one or more example methods, the method comprises performing a second CV charging procedure. For example, the second CV charging procedure can be seen as a CV charging phase of the second charging procedure. For example, performing a CV charging procedure may comprise supplying (e.g., applying) a charging current that gradually decreases in relation to the second current reference value. In one or more example methods, the charging current gradually decreases in relation to the second current reference value until the charging current meets a current termination value. In one or more example methods, the current termination value indicates that the battery is charged to the second capacity level. For example, the current termination value indicates that the battery is charged to its currently maximum capacity. A currently maximum capacity may be seen as a (desired) target capacity. The battery may be charged to its currently maximum capacity (e.g., to its (desired) target capacity) when the battery has a SOH higher than the maximum capacity when charged to the maximum rated voltage by the power supplier.

In one or more example methods, the second voltage reference value can be seen as a charge voltage, e.g., the voltage that the battery is charged to when charged to full capacity (e.g., to its currently maximum capacity). In one or more example methods, the method comprises stopping the second charging procedure (e.g., the second CV charging procedure) when the charging current (e.g., approximately) meets the current termination value. In one or more example methods, the method comprises maintaining the voltage of the battery until the charging current (e.g., approximately) meets the current termination value. The battery may be seen as fully charged when the charging current (e.g., approximately) meets the current termination value. The battery may be seen as fully charged when the internal voltage of the battery meets the second voltage reference value, e.g., a terminal voltage and/or charge voltage.

Embodiments of the present disclosure can allow extension of the lifespan of the battery by performing the second charging procedure based on the second current reference value, the second voltage reference value, and the target value. In other words, maintaining the voltage of the battery at the second voltage reference comprises performing the second CV charging procedure at a constant voltage adapted to the requirements of the battery, e.g., adapted to the SOH of the battery. For example, the voltage of the battery can reach a higher voltage, e.g., higher than the second voltage reference value. However allowing the voltage of the battery to rise until such higher voltage may lead to an increase in the degradation of the battery over time. Embodiments of the present disclosure provide for a charging procedure capable of extending the lifespan of the battery as the second voltage reference value is adjusted to the SOH of the battery. For example, embodiments of the present disclosure advantageously allow charging the battery of each of the pair of hearing aids in a faster manner, however not charging as fast as the respective hearing aid of the pair of hearing aids can (e.g., the the second voltage reference value is adjusted to the SOH of the battery, e.g., not to initial requirements of the battery).

In one or more example methods, the method comprises determining the second voltage reference value based on the second target value. In one or more example methods, the second target value comprises one or more of: a second energy target and a second charge capacity target. In one or more example methods, the method comprises storing the second voltage reference value in a memory of the respective hearing aid of the pair of hearing aids..

In one or more example methods, the method comprises determining the second voltage reference value based on the second target value before obtaining the charging configuration. The charging configuration may comprise the second voltage reference value determined based on the second target value. In one or more example methods, the method comprises adjusting the second voltage reference value based on the second target value after obtaining the charging configuration. In one or more example methods, the charging configuration comprises at least the second target value and the second voltage reference value. In one or more example methods, the second voltage reference value comprised in the charging configuration is not adjusted to the second target value. In one or more example methods, determining the second voltage reference value based on the second target value can be construed as adjusting the second voltage reference value based on the second target value. In one or more example methods, a target value is a pre-determined value.

In one or more example methods, the second voltage reference value is a voltage value configured to match a constant capacity target (e.g., a constant charge capacity target) and/or a constant energy target. In other words, the second voltage reference value is adjusted in accordance with a constant charge capacity target and/or a constant energy target. In one or more example methods, a charge capacity target is indicative of a relationship between the battery voltage (e.g., the internal voltage of the battery) and the battery discharge capacity (e.g., a battery level and/or a battery capacity that has been discharged). In other words, the charge capacity target may be derived based on a relationship between the battery voltage and the battery discharge capacity. In one or more example methods, a charge capacity target value can be given in Ah. An energy target may be seen as the total amount of energy the battery can store and/or accumulate. In one or more example methods, an energy target value can be given in Wh.

In one or more example methods, the method comprises storing the first current reference value as well as the first voltage reference value of each of the at least two hearing aids in the memory of the respective hearing aid and/or of an auxiliary device.

In one or more example methods, the charging configuration of each pair of hearing aids is associated with one or more of: the hearing aid type, the battery type, and the first and second target values (e.g., the SOH) of the respective battery.

In one or more example methods, the first current reference value, the first voltage reference value, the second current reference value, and the second voltage reference value associated with an application requirement, e.g., with the hearing aid type and with the battery type. In one or more example methods, the first current reference value and the second current reference value are associated with the hearing aid type. In one or more example methods, the first current reference value and the first voltage reference value can be pre-determined. In one or more example methods, the second voltage reference value can be adjusted based on the second target value. In one or more example methods, the second voltage reference value and the second current reference value can be associated with the hearing aid type, the battery type, and the SOH of the respective battery.

For example, the method can be performed by the pair of hearing aids. For example, the method can be partly performed by the pair of hearing aids in the sense that the steps including the determination the operating window, the selection of the initial charging configuration point, the determination of the first current reference value, the first voltage reference value, the second current reference value and the second voltage reference value can be performed by an auxiliary device (e.g., a computer). Optionally, the method can be fully or partly performed by a charging device (e.g., a smart charging device). The method may be partly performed by the charging device in the sense that the steps including the determination the operating window, the selection of the initial charging configuration point, the determination of the first current reference value, the first voltage reference value, the second current reference value and the second voltage reference value can be performed by an auxiliary device (e.g., a computer). In one or more example methods, the charging device can be an external charger, e.g., a charger to charge the battery of each of the pair of hearing aids.

In one or more example methods, the method comprises obtaining a manufacturer charging configuration indicative of a manufacturer charging profile of the battery of the respective hearing aid. For example, the manufacturer charging configuration comprises the maximum voltage value and the maximum current value In one or more example methods, the method comprises obtaining the manufacturer charging configuration (e.g., from a memory of an auxiliary device).

In one or more example methods, the maximum voltage value can be seen as the initial voltage reference value being provided by the manufacturer (e.g., a maximum and/or advisable voltage value that can be handled by the battery of the respective hearing aid). In one or more example methods, the maximum current value can be seen as the initial current reference value being provided by the manufacturer (e.g., a maximum and/or advisable current value that can be handled by the battery of the respective hearing aid).

In one or more example methods, the method comprises determining a minimum voltage value based on the maximum voltage value. For example, the maximum voltage value can be 4.2V and the minimum voltage value can be 3.8V. In one or more example methods, the method comprises determining a plurality of voltage values based on the maximum and minimum voltage values. For example, the method comprises determining a range of voltage values, such as from 3.8V to 4.2V. The range of voltage values may comprise 3.8V, 3.9V, 4V, 4.1V, and 4.2V. The range of voltage values may comprise 3.8V, 3.85V, 3.9V, 3.95V, 4V, 4.05V, 4.1V, 4.15V, 4.2V.

In one or more example methods, the method comprises determining a minimum current value based on the maximum current value. For example, the maximum current value can be determined such that it allows a C-rate of 0.5C (e.g., usually provided by the manufacturer) and the minimum current value can be determined such that it allows a C-rate of 0.3C. In one or more example methods, the method can comprise determining a second minimum current value based the minimum current value (e.g., provided by the manufacturer). The second minimum current value exceeds (e.g., is greater than) the minimum current value provided by the manufacturer, for mapping (e.g., determining) how a battery can be charged with higher current when not charging to the maximum voltage. For example, the maximum current value can be determined such that it allows a C-rate of 1.0C (e.g., based on the second minimum current value) and the minimum current value can be determined such that it allows a C-rate of 0.3C.

In one or more example methods, the method comprises determining a plurality of current values based on the maximum and minimum current values. Optionally, performing the iterative charging and discharging procedure comprises determining a plurality of current values based on the maximum and the second minimum current values.

For example, the method comprises determining a range of current values such that it allows a range of C-rates, such as from 0.3C to 0.5C or from 0.3C to 1.0C . The range of C-rates may comprise 0.3C, 0.4C, 0.5C. The range of C-rates values may comprise 0.3C, 0.35C, 0.4C, 0.45C, 0.5C. The range of C-rates values may comprise 0.3C,0.4C, 0.5C, 0.6C, 0.7C, 0.8C, 0.9C, 1.0C. The range of C-rates values may comprise 0.3C, 0.35C, 0.4C, 0.45C, 0.5C, 0.55C, 0.6C, 0.65C, 0.7C, 0.75C, 0.8C, 0.85C, 0.9C, 0.95C, 1.0C.

In one or more example methods, performing the iterative charging and discharging procedure comprises setting an auxiliar voltage to the minimum voltage value. For example, the auxiliar voltage value becomes equal to the minimum voltage value.

In one or more example methods, performing the iterative charging and discharging procedure comprises setting an auxiliar current to the minimum current value. For example, the auxiliar current value becomes equal to the minimum current value.

In one or more example methods, performing the iterative charging and discharging procedure comprises iteratively (e.g., repeatedly) performing, for each current value of the plurality of current values, the following steps until the auxiliar voltage value meets the maximum voltage value:
- determining (e.g., measuring) the charging capacity of the respective battery by applying (e.g., supplying) a charging current to the respective battery based on the auxiliar current value until the voltage of the battery meets the auxiliar voltage value;
- determining (e.g., measuring) the discharging capacity of the respective battery by applying a discharging current to the respective battery until the voltage of the battery meets a shutdown voltage;
- determining the coulombic efficiency based on the charging and discharging capacities of the respective battery; and
- determining whether the coulombic efficiency is greater than or equal to the threshold.

In one or more example methods, charging capacity and charge capacity can be used interchangeably. In one or more example methods, discharging capacity and discharge capacity can be used interchangeably.

In one or more example methods, applying the charging current which is based on the auxiliar current value to the respective battery comprises charging the respective battery at a constant current (e.g., at an approximately constant current, such as current approximately equal to the auxiliar current value). For example, applying (e.g., supplying) the charging current to the respective battery can be seen as a charging cycle. In one or more example methods, the charging capacity of the respective hearing aid is indicative of the amount of charge that can be stored in the battery of the respective hearing aid during the charging cycle.

In one or more example methods, applying the discharging current to the respective battery comprises discharging the respective battery at a constant current (e.g., at an approximately constant current). The discharging current may be based on current values allowing C-rates of 0.5C 0.2C, 0.05C. For example, the discharging current may be based on a range of current values allowing C-rates of 0.05C to 0.5C. For example, the discharging current can be based on a current value allowing a C-rate of 0.2C for Lithium plating testing (e.g., detection). Slower discharge of the respective battery via a lower discharging current may be more precise in comparison with higher discharging current. For example, applying (e.g., supplying) the discharging current to the respective battery can be seen as a discharging cycle. In one or more example methods, the discharging capacity is indicative the amount of charge that can be extracted (e.g., drawn) from the battery during the discharge cycle (e.g., the amount of charge that has been stored in the battery during the charging cycle).

In one or more example methods, the shutdown voltage can be seen as a voltage value at which the respective hearing aid is configured to turn off or enter a low-power state. The shutdown voltage may be based on a voltage value of 3V or 2.5V.

In one or more example methods, the coulombic efficiency can be seen as the ratio between the discharging capacity to the charging capacity. Determining the coulombic efficiency comprises comparing the discharging capacity (e.g., the amount of charge the charge extracted from the respective battery during the discharging cycle) with the charging capacity (e.g., the amount of charge that can be stored in the respective battery during the charging cycle).

In one or more example methods, the threshold may be a percentage. The threshold may be one or more of: 98%, 99%, and 100%. The threshold may be a range between 98%-100% or 99%-100%.

In one or more example methods, determining whether the coulombic efficiency is greater than or equal to a threshold comprises determining that the coulombic efficiency is greater than or equal to the threshold.

In one or more example methods, determining whether the coulombic efficiency is greater than or equal to the threshold comprises, upon determining that the coulombic efficiency is greater than or equal to the threshold, storing the auxiliar current value, the auxiliar voltage value, and the temperature value in form of an initial charging configurating point in the memory the respective hearing aid and/or the auxiliary device.

In one or more example methods, determining whether the coulombic efficiency is greater than or equal to a threshold comprises, upon determining that the coulombic efficiency is greater than or equal to the threshold, determining whether the auxiliar voltage value is less than the maximum voltage value (e.g., determining whether the auxiliar voltage value meets the maximum voltage value).

In one or more example methods, determining whether the auxiliar voltage value is less than the maximum voltage value comprises determining that the auxiliar voltage value is less than the maximum voltage value. In one or more example methods, the method comprises, upon determining that the auxiliar voltage value is less than the maximum voltage value, setting the auxiliar voltage to the following voltage value of the plurality of voltage values (e.g., and repeat the steps described above).

In one or more example methods, determining whether the auxiliar voltage value is less than the maximum voltage value comprises determining that the auxiliar voltage is equal to the maximum voltage value (e.g., determining that the auxiliar voltage value meets the maximum voltage value). For example, the method comprises, upon determining that the auxiliar voltage meets the maximum voltage value, setting the auxiliar current value (such as, previously set to the minimum current value) to the following current value of the plurality of current values. For example, the method comprises, upon determining that the auxiliar voltage meets the maximum voltage value, stop performing the iterative charging and discharging procedure for the respective current value of the plurality of current values and start performing the iterative charging and discharging procedure for the following current value of the plurality of current values.

In one or more example methods, determining whether the coulombic efficiency is greater than or equal to the threshold comprises determining that the coulombic efficiency less than the threshold. In one or more example methods, determining whether the coulombic efficiency is greater than or equal to the threshold comprises, upon determining that the coulombic efficiency is less than the threshold, determining whether the auxiliar current value is less than the maximum current value. In one or more example methods, determining whether the auxiliar current value is less than the maximum current value comprises determining that the auxiliar current value is less than the maximum current value. In one or more example methods, determining whether the auxiliar current value is less than the maximum current value comprises, upon determining that the auxiliar current value is less than the maximum current value, setting the auxiliar current value to the following current value of the plurality of current values.

In one or more example methods, determining whether the auxiliar current value is less than the maximum current value comprises determining that the auxiliar current value equal to the maximum current value. In one or more example methods, determining whether the auxiliar current value is less than the maximum current value comprises, upon determining that the auxiliar current value is equal to the maximum current value, stop performing the iterative charging and discharging procedure (e.g., stop performing the iterative charging and discharging procedure for the respective temperature of the one or more temperatures and start performing the iterative charging and discharging procedure for the following temperature value of the one or more of temperature values , e.g., upon setting an auxiliar temperature value - such as, previously set to the minimum temperature value of the one or more temperature value - to the following temperature value of the one or more temperature values).

For example, when the coulombic efficiency (CE) drops (e.g., is below the threshold, such as indicating existence of Li-plating in an anode), the method comprises moving over to the next current value and performing, for the next current value and until the auxiliar voltage value meets the maximum voltage value.

In one or more example methods, determining the first voltage reference value comprises determining a voltage value corresponding to the first target when applying a charging current based on the first current reference value to the battery of the respective hearing aid.

In one or more example method, the method can also be used for configuring the charging profiles of the battery of each of the pair of hearing aids when the battery models of each hearing aid are the same. In other words, the battery model of each of the pair of hearing aids may be the same.

In one or more example methods, the first target value and the second target value of a hearing aid of the pair of hearing aids are the same of the first target value and the second target value of other hearing aid of the pair of hearing aids. For example, the second target value of a hearing aid of the pair of hearing aids can be different from the second target value of other hearing aid of the pair of hearing aids.

### A hearing system:

A hearing system comprising a pair of hearing aids of the same type, a charging device, and an auxiliary device is disclosed. The battery of the each of the pair of hearing aids is characterized by a battery model. The battery model of each of the pair of hearing aids being different from one another.

The auxiliary device comprises an interface, a processor and a memory.

The interface (e.g., wired or wireless interface) is configured to obtain a temperature value. The interface is configured to provide, to each of the pair of hearing aids, a charging configuration indicative of the charging profile of a respective battery of each of the pair of hearing aids. The charging configuration comprises at least a first current reference value, a first voltage reference value, a first target value, and a second current reference value.

The processor is configured to determine an operating window comprising a plurality of initial charging configurating points associated with a coulombic efficiency greater than or equal to a threshold. Each of the plurality of initial charging configuration points is indicative of a current value, a voltage value, and the temperature value. Determining the operating window comprises performing, for the temperature value, an iterative charging and discharging procedure based on a maximum voltage value and a maximum current value,

The processor is configured to select an initial charging configuration point from the operating window based on a first target value and a charging time. The first target value is indicative of an amount of charge or energy required by the respective hearing aid for a day of use. The charging time is indicative of a time required to charge the respective hearing aid for the day of use. The first current reference value is the current value of the selected initial charging configuration point.

The processor is configured to determine a first voltage reference value based on the first current reference value and the first target value.

The processor is configured to determine the second current reference value based the maximum current value. The operating window comprises the second current reference value.

The memory is configured to store one or more of: the plurality of initial charging configurating points, the selected initial charging configuration point, and the charging configuration.

The charging device is configured to operate as a power supply in respect to each of the pair of hearing aids.

Each of the pair of hearing aids comprises an input unit, a processing unit, an output unit, and the battery. The input unit is configured to receive an acoustical signal and convert the acoustical signal into an input signal. The processing unit configured to process the input signal with a hearing loss profile of the user. The output unit configured to emit the processed signal with the hearing loss profile into the ear of the user.

The input unit is configured to receive, from the auxiliary device, the charging configuration. The processing unit is configured to perform a first charging procedure based on the received charging configuration. Performing the first charging procedure comprises applying a charging current to the battery of the respective hearing aid based on the first current reference value. The charging current is constant. Applying the charging current to the battery of the respective hearing aid causes an increase in a voltage of the battery of the respective hearing aid of the pair of hearing aids. Performing the first charging procedure comprises determining whether the voltage of the battery of the respective hearing aid meets the first voltage reference value. Performing the first charging procedure comprises, upon determining that the voltage meets the first voltage reference value, maintaining the voltage of the battery of the respective hearing aid at the first voltage reference value by controlling the charging current until the charging current meets the second current reference value.

The hearing system may be adapted to establish a communication link between the at least two hearing aids and the charging device to provide that information (e.g., the charging configuration, some or all parameters of the charging configuration, control and status signals, or any other information suitable for the charging procedure) can be exchanged or forwarded from one to the other.

The auxiliary device may be constituted by or comprise one or more of: a smartphone, a computer, a server, or other portable or wearable electronic device, such as a smartwatch or the like, or a battery testing device (for testing the batteries of the pair of hearing aids).

The auxiliary device may be constituted by or comprise an audio gateway device adapted for receiving a multitude of audio signals (e.g., from an entertainment device, e.g. a TV or a music player, a telephone apparatus, e.g. a mobile telephone or a computer, e.g., a PC, a wireless microphone, etc.) and adapted for performing the initialization procedure (e.g., the iterative charging and discharging procedure) for proper selection of the initial charging configuration.

The at least two hearing aids may be adapted to implement a binaural hearing system, e.g. a binaural hearing aid system. The at least two hearing aids may be two independent hearing aids solely used for testing the charging procedure disclosed herein.

The charging device may be configured to charge the (e.g., rechargeable battery) of each of the pair of hearing aids. The charging device may comprise an integrated circuit (IC) charger.

It is intended that some or all of the structural features of the hearing aid described above, in the 'detailed description of embodiments' or in the claims can be combined with embodiments of the method, when appropriately substituted by a corresponding process and vice versa. Embodiments of the method have the same advantages as the corresponding hearing system.

### A computer readable medium or data carrier:

In an aspect, a tangible computer-readable medium (a data carrier) storing a computer program comprising program code means (instructions) for causing a data processing system (a computer) to perform (carry out) at least some (such as a majority or all) of the (steps of the) method described above, in the 'detailed description of embodiments' and in the claims, when said computer program is executed on the data processing system is furthermore provided by the present application.

By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Other storage media include storage in DNA (e.g. in synthesized DNA strands). Combinations of the above should also be included within the scope of computer-readable media. In addition to being stored on a tangible medium, the computer program can also be transmitted via a transmission medium such as a wired or wireless link or a network, e.g. the Internet, and loaded into a data processing system for being executed at a location different from that of the tangible medium.

### A computer program:

A computer program (product) comprising instructions which, when the program is executed by a computer, cause the computer to carry out (steps of) the method described above, in the 'detailed description of embodiments' and in the claims is furthermore provided by the present application.

The invention is set out in the appended set of claims.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIGS. 1A-1D are a flow-chart of an example method for configuring a charge profile of a battery of each of a pair of hearing aids according to the present disclosure;
FIG. 2 illustrates an example charging device according to the present disclosure;
FIGS. 3A-3B illustrate an example hearing aid according to the present disclosure;
FIG. 4 shows a graph illustrating an example first charging procedure and an example second charging procedure according to the present disclosure;
FIG.5A-5B show graphs illustrating an example first charging procedure and an example second charging procedure for a pair of hearing aids according to the present disclosure; and
FIG. 5C shows a graph illustrating charging capacity uniformity between a pair of hearing aids according to the present disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

### DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

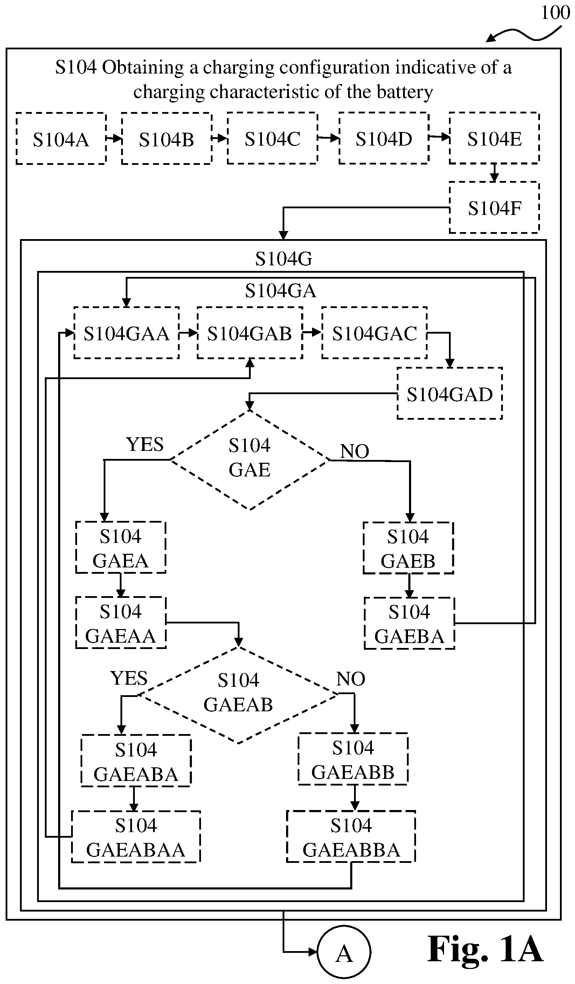

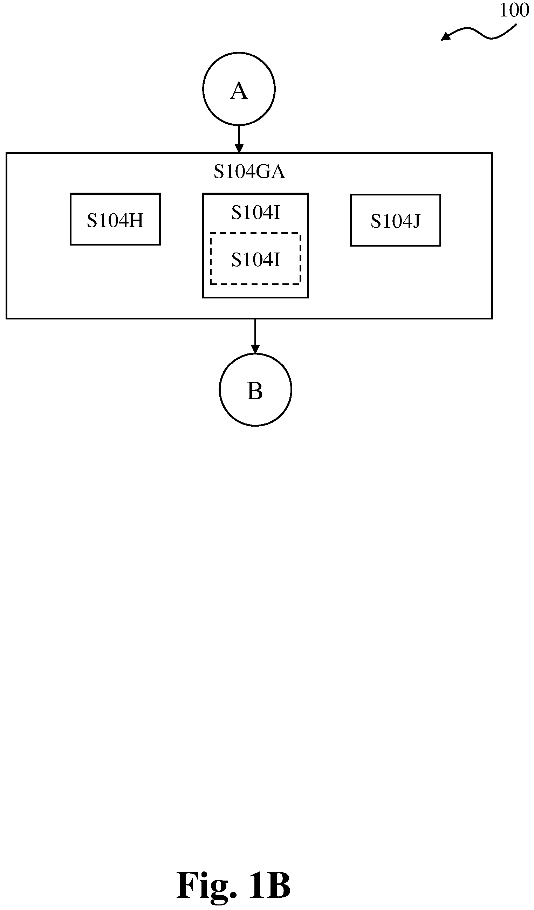

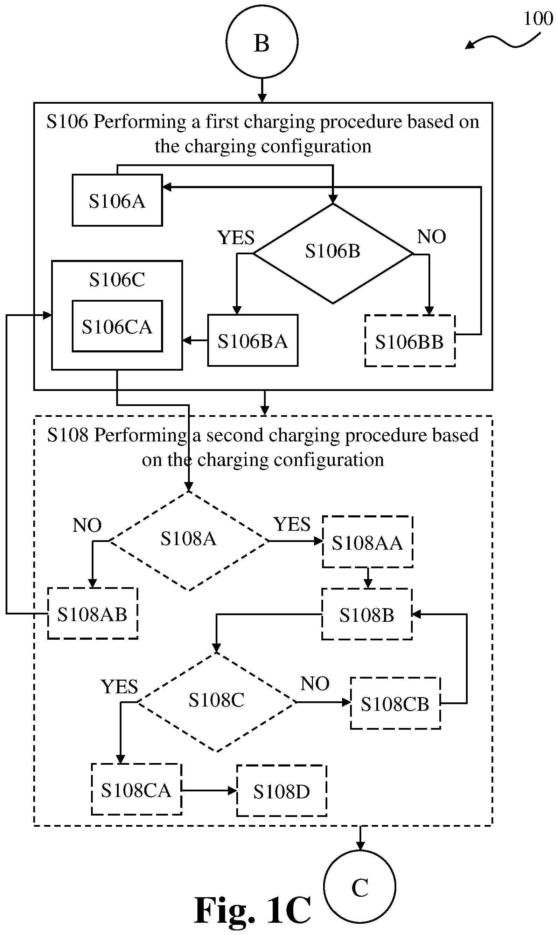

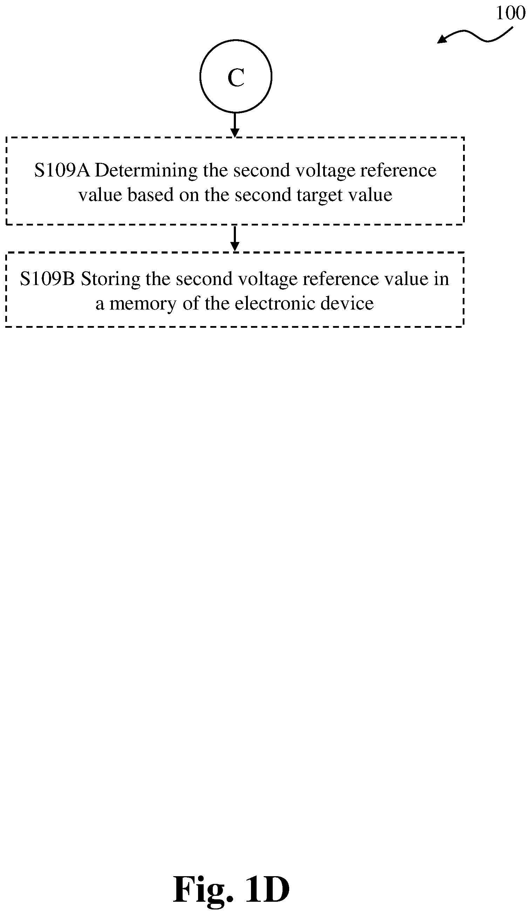

FIGS. 1A-1D are a flow-chart of an example method 100 for configuring a charging profile of a battery of a pair of hearing aids (e.g., or of at least two hearing aids) according to this disclosure. FIGS. 1A-1D show a flow-chart of an example method 100 for configuring a battery of each of a pair of hearing aids intended to be charged (e.g., when the respective battery level is below a threshold, e.g., when the battery of the respective hearing aid is running out of power). The battery of each of the pair of hearing aids is characterized by a battery model, the battery model of the of each of the pair of hearing aids being different from one another. Each of the pair of hearing aids are of the same type.

The method 100 may be performed by a hearing system comprising the pair of hearings aids, a charging device, and an auxiliary device . For example, each of the pair hearing aids comprises a rechargeable battery. The auxiliary device may comprise one or more of: a smartphone (e.g., a mobile phone), a portable electronic device, a wearable electronic device (e.g., a smartwatch), a tablet, a computer, a battery testing device and any other suitable auxiliary device.

The method 100 comprises obtaining S104, for each of the pair of hearing aids, a charging configuration indicative of a charging indicative of the charging profile (e.g., characteristic) of the respective battery of each of the pair of hearing aids. The charging configuration comprises at least a first current reference value, a first voltage reference value, a second current reference value, and a first target value.

For example, obtaining S104 the charging configuration can comprise obtaining S104A one or more temperature values.

In one or more example methods, the method 100 comprises obtaining S104B a manufacturer charging configuration indicative of a manufacturer charging characteristic of the battery of the respective hearing aid. In one or more example methods, the manufacturer charging configuration comprises a maximum voltage value and a maximum current value.

In one or more example methods, the method 100 comprises determining S104C a minimum voltage value based on the maximum voltage value. In one or more example methods, the method 100 comprises determining S104D a plurality of voltage values based on the maximum and minimum voltage values.

In one or more example methods, the method 100 comprises determining S104E a minimum current value based on the maximum current value. In one or more example methods, the method 100 comprises determining S104F a plurality of current values based on the maximum and minimum current values.

Obtaining S104 the charging configuration comprises determining S104G an operating window comprising a plurality of initial charging configurating points. Each of the plurality of initial charging configuration points is indicative of a current value, a voltage value, and a temperature value. Each of the plurality of initial charging configuration points is associated with a coulombic efficiency greater than or equal to a threshold.

Determining S 104G the operating window comprises performing S 104GA, for each of the one or more temperature values, an iterative charging and discharging procedure based on the based on a maximum voltage value and a maximum current value (e.g., the manufacturer charging configuration).

Obtaining S104 the charging configuration comprises selecting S104H an initial charging configuration point from the operating window based on a first target value and a charging time. The first target value is indicative of an amount of charge or energy required by the respective hearing aid for a day of use. The charging time is indicative of a time required to charge the respective hearing aid for the day of use.

The first current reference value is the current value and the voltage value of the selected initial charging configuration point.

Obtaining S104 the charging configuration comprises determining S104I the first voltage reference value based on the first current reference value and the first target value.

Obtaining S104 the charging configuration comprises determining S104J the second current reference value based the maximum current value. The operating window comprises the second current reference value.

In one or more example methods, performing S 104GA the iterative charging and discharging procedure comprises setting S 104GAA an auxiliar voltage value and an auxiliar current value to the minimum voltage value and the minimum current value, respectively.

In one or more example methods, performing S 104GA the iterative charging and discharging procedure comprises iteratively performing, for each current value of the plurality of current values, the following steps until the auxiliar voltage value meets the maximum voltage value:
- determining S104GAB a charging capacity of the respective battery by applying a charging current to the respective battery based on the respective current value until the voltage of the battery meets the auxiliar voltage value;
- determining S104GAC a discharging capacity of the respective battery by applying a discharging current to the respective battery until the voltage of the battery meets a shutdown voltage;
- determining S 104GAD the coulombic efficiency based on the charging and discharging capacities of the respective battery; and
- determining S 104GAE whether the coulombic efficiency is greater than or equal to the threshold.

In one or more example methods, determining S 104GAE whether the coulombic efficiency is greater than or equal to the threshold comprises:
- determining S 104GAEA that the coulombic efficiency is greater than or equal to the threshold;
- upon determining S 104GAEA that the coulombic efficiency is greater than or equal to the threshold,
   ∘ storing S104GAEAA the current value, the auxiliar voltage value, and the temperature value in form of an initial charging configurating point in the memory the respective hearing aid and/or an auxiliary device,
   ∘ determining S 104GAEAB whether the auxiliar voltage value is less than the maximum voltage value.

In one or more example methods, determining S104GAEAB whether the auxiliar voltage value is less than the maximum voltage value comprises determining S 104GAEABA that the auxiliar voltage value is less than the maximum voltage value.

In one or more example methods, upon determining S 104GAEABA that the auxiliar voltage value is less than the maximum voltage value, setting S 104GAEABAA the auxiliar voltage value to the following voltage value of the plurality of voltage values (e.g., and repeat the steps described above).

In one or more example methods, determining S104GAEAB whether the auxiliar voltage value is less than the maximum voltage value comprises determining S 104GAEABB that the auxiliar voltage is equal to the maximum voltage value (e.g., determining that the auxiliar voltage value meets the maximum voltage value). For example, the method comprises, upon determining S104GAEABB that the auxiliar voltage meets the maximum voltage value, setting S 104GAEABBA the auxiliar current value (e.g., previously set to the minimum current value) to the following current value of the plurality of current values. For example, the method comprises, upon determining that the auxiliar voltage meets the maximum voltage value, stop performing the iterative charging and discharging procedure for the respective current value of the plurality of current values and start performing the iterative charging and discharging procedure for the following current value of the plurality of current values.

In one or more example methods, determining S104GAE whether the coulombic efficiency is greater than or equal to the threshold comprises determining S104GAEB that the coulombic efficiency less than the threshold.

In one or more example methods, determining S104GAE whether the coulombic efficiency is greater than or equal to the threshold comprises, upon determining S104GAEB that the coulombic efficiency is less than the threshold, setting S 104GAEBA the auxiliar current value to the following current value of the plurality of current values when the auxiliar current value does not reach the maximum current value.

For example, determining S104GAE whether the coulombic efficiency is greater than or equal to the threshold comprises, upon determining S104GAEB that the coulombic efficiency is less than the threshold, determining whether the auxiliar current value is less than the maximum current value. In one or more example methods, determining whether the auxiliar current value is less than the maximum current value comprises determining that the auxiliar current value is less than the maximum current value. In one or more example methods, determining whether the auxiliar current value is less than the maximum current value comprises, upon determining that the auxiliar current value is less than the maximum current value, setting the auxiliar current value to the following current value of the plurality of current values.

For example, determining S104GAE whether the coulombic efficiency is greater than or equal to the threshold comprises, upon determining S104GAEB that the coulombic efficiency is less than the threshold, stop performing the iterative charging and discharging procedure for the temperature value when the auxiliar current value reaches the maximum current value. For example, determining whether the auxiliar current value is less than the maximum current value comprises determining that the auxiliar current value equal to the maximum current value. For example, determining whether the auxiliar current value is less than the maximum current value comprises, upon determining that the auxiliar current value is equal to the maximum current value, stop performing the iterative charging and discharging procedure (e.g., stop performing the iterative charging and discharging procedure for the respective temperature of the one or more temperatures and start performing the iterative charging and discharging procedure for the following temperature value of the one or more of temperature values , e.g., upon setting an auxiliar temperature value - such as, previously set to the minimum temperature value of the one or more temperature value - to the following temperature value of the one or more temperature values).

In one or more example methods, determining S104I the first voltage reference value comprises determining S 104IA a voltage value corresponding to the first target when applying a charging current based on the first current reference value to the battery of the respective hearing aid.

The method 100 comprises performing S106, for each of the pair of hearing aids, a first charging procedure based on the respective charging configuration.

Performing S106 the first charging procedure comprises applying S106A a charging current to the battery of the respective hearing aid of the pair of hearing aids based on the first current reference value. The charging current is constant. Applying S 106A the charging current to the battery causes an increase in a voltage of the battery of the respective hearing aid of the pair of hearing aids.

Performing S106 the first charging procedure comprises determining S106B whether the voltage of the battery meets the first voltage reference value.

Determining S106B whether the voltage of the battery of the respective hearing aid of the pair of hearing aids meets the first voltage reference value comprises determining S 106BA that the voltage of the battery meets the first voltage reference value. In one or more example methods, determining S 106B whether the voltage of the battery of the respective hearing aid of the pair of hearing aids meets the first voltage reference value comprises determining S 106BB that the voltage of the battery of the respective hearing aid of the pair of hearing aids does not meet the first voltage reference value.

Performing S106 the first charging procedure comprises, upon determining S 106BA that the voltage meets the first voltage reference value, maintaining S106C the voltage of the battery of the respective hearing aid of the pair of hearing aids at the first voltage reference value by controlling S 106CA the charging current until the charging current meets the second current reference value.

In one or more example methods, performing S106 the first charging procedure comprises, upon determining S106BB that the voltage of the battery of the respective hearing aid of the pair of hearing aids does not meet the first voltage reference value, applying S106A the charging current to the battery based on the first current reference value. In one or more example methods, performing S106 the first charging procedure comprises, upon determining S106BB that the voltage of the battery of the respective hearing aid of the pair of hearing aids does not meet the first voltage reference value, determining S106B whether the voltage of the battery of the respective hearing aid of the pair of hearing aids meets the first voltage reference value. In other words, the method 100 may comprise applying S106A the charging current to the battery until determining S 106BB that the voltage of the battery of the respective hearing aid of the pair of hearing aids meets the first voltage reference value.

In one or more example methods, the charging configuration further comprises a second voltage reference value, and a second target value indicative of an amount of charge or energy required by the respective hearing aid to be fully charged (e.g., indicative of a SOH of the battery. In one or more example methods, the method 100 comprises performing S108, for each of the pair of hearing aids, a second charging procedure based on the charging configuration.

In one or more example method, the method 100 comprises determining S108A whether the charging current meets the second current reference value.

In one or more example methods, determining S108A whether the charging current meets the second current reference value comprises determining S108AA that the charging current meets the second current reference value.

In one or more example methods, performing S108 the second charging procedure comprises determining S108AA that the charging current meets the second current reference value.

In one or more example methods, the method 100 comprises, upon determining S 108AA that the current meets the second current reference value, applying S108B the charging current to the battery based on the second current reference value. In one or more example methods, the charging current is constant. In one or more example methods, applying S108B the charging current to the battery of the respective hearing aid causes an increase in the voltage of the battery.

In one or more example methods, determining S108A whether the charging current meets the second current reference value comprises determining S108AB that the charging current does not meet the second current reference value.

In one or more example methods, the method 100 comprises, upon determining S108AB that the charging current does not meet the second current reference value, maintaining S106C the voltage of the battery of the respective hearing aid at the first voltage reference value by controlling S106CA the charging current until the charging current meets the second current reference value. In one or more example methods, the method 100 comprises, upon determining S108AB that the current does not meet the second current reference value, determining S108A whether the charging current meets the second current reference value. In other words, the method 100 may comprise maintaining S106C the voltage of the battery of the respective hearing aid at the first voltage reference value until determining S108AA that the charging current meets the second current reference value.

In one or more example methods, performing S108 the second charging procedure comprises determining S108C whether the voltage meets the second voltage reference value.

In one or more example methods, determining S108C whether the voltage meets the second voltage reference value comprises determining S108CA that the voltage meets the second voltage reference value.

In one or more example methods, the method 100 comprises, upon determining S108CA that the voltage meets the second voltage reference value, maintaining S108D the voltage of the battery at the second voltage reference value.

In one or more example methods, determining S108C whether the voltage meets the second voltage reference value comprises determining S108CB that the voltage does not meet the second voltage reference value.

In one or more example methods, the method 100 comprises, upon determining S 108CB that the voltage does not meet the second voltage reference value, applying S108B the charging current applying the charging current to the battery of the respective hearing aid based on the second current reference value. In one or more example methods, the method 100 comprises, upon determining S108CB that the voltage does not meet the second voltage reference value, determining S108C whether the voltage meets the second voltage reference value. In other words, the method 100 may comprise applying S108B the charging current to the battery until determining S 108CA that the voltage meets the second voltage reference value.

In one or more example methods, the method 100 comprises determining S109A the second voltage reference value based on the second target value. In one or more example methods, the method 100 comprises storing S109B the second voltage reference value in a memory of the respective hearing aid. In one or more example methods, the second target value comprises an energy target value or a charge capacity target value.

In one or more example methods, the method 100 can comprise determining storing the first current reference value, the first voltage reference, the second voltage reference value, the second current reference value in the memory of the respective hearing aid.

In one or more example methods, the charging configuration of each of the pair hearing aids is associated with one or more of: the hearing aid type, the battery type, the first target value, and the second target of the respective battery.

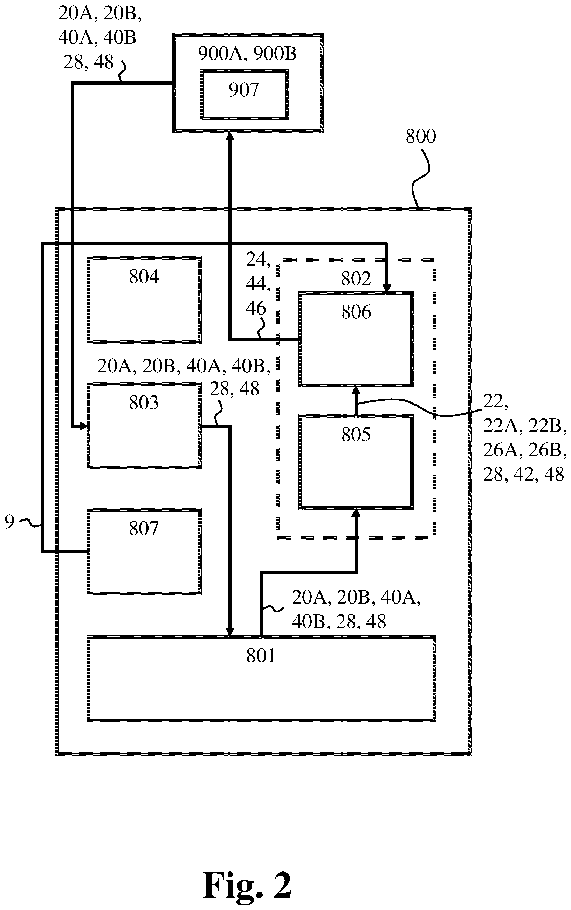

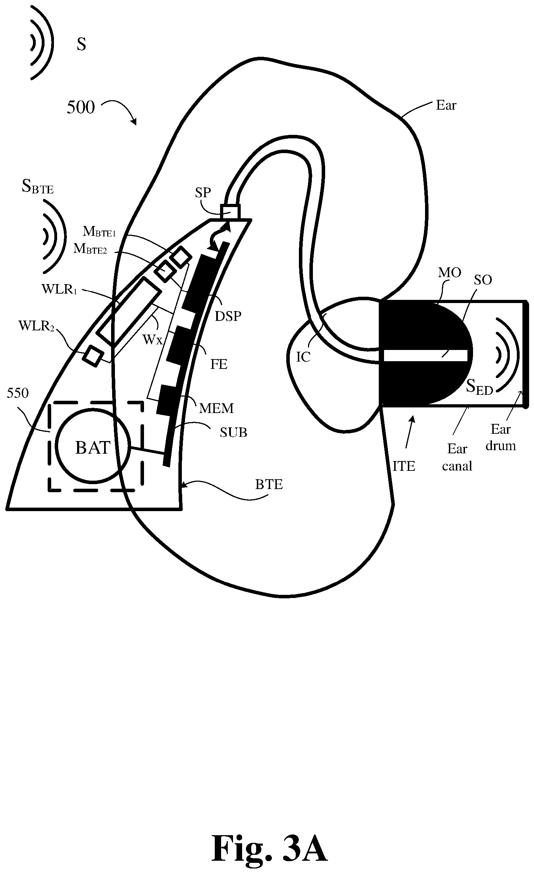

FIG. 2 illustrates an example charging device 800 according to the present disclosure. FIG. 2 schematically illustrates an electronic device, such as a charging device 800 according to the present disclosure. The charging device 800 may be configured to configure a charge profile of a battery of a pair of hearing aids and charge the battery of a pair of hearing aids, e.g., battery BAT of hearing aid 500 of FIGS. 3A-3B (each of the pair of hearing aids may have the same structure of hearing aid 500). The charging device 800 may be configured to perform some or all of the steps of the method disclosed in FIGS. 1A-1D.

The battery level of the pair of hearing aids900A, 900B is intended to be charged when such battery level is below a threshold (e.g., when each of the two hearing aids are running out of power). The user of the pair of hearing aids 900A, 900B can initiate a configuration of the charge profile of each of the pair of hearing aids and/or a charging procedure by connecting the pair of hearing aids 900A, 900B to the charging device 800. For example, the pair of hearing aids 900A,900B is configured to determine that a charging unit of each of the pair of hearing aids 900A, 900B is in communication with a power supply (e.g., battery 807), by means of connection to the charging device 800. For example, the charging device 800 is configured to initiate a configuration procedure and/or a power charging procedure by detecting connection to the each of the pair of hearing aids 900A, 900B. For example, the charging device 800 is configured to perform a power charging procedure by detecting connection to each of the pair of hearing aids900A, 900B. In one or more example charging devices, each of the pair of hearing aids 900A, 900B is configured to be charged by the charging device 800. In one or more example charging devices, the power supply is configured to provide energy 9 to the charging unit 806. The power supply may be seen as the battery 807 of the charging device 800. The power supply may be a power supply of 5V.

The charging device 800 comprises a memory 801, a processor 802, an interface 803, a power source 804, and a battery 807. The processor 802 may comprise the controller 805 and the charging unit 806. Optionally, the charging device 800 comprises the memory 801, the interface 803, the power source 804, the controller 805, the charging unit 806, and the battery 807. In other words, the controller 805 and the charging unit 806 may not be part of the processor 802. The charging unit 806 may comprise the controller 805. Stated differently, the controller 805 may be incorporated in the charging unit 806. For example, the charging unit 706 can be an integrated circuit (IC) charger.

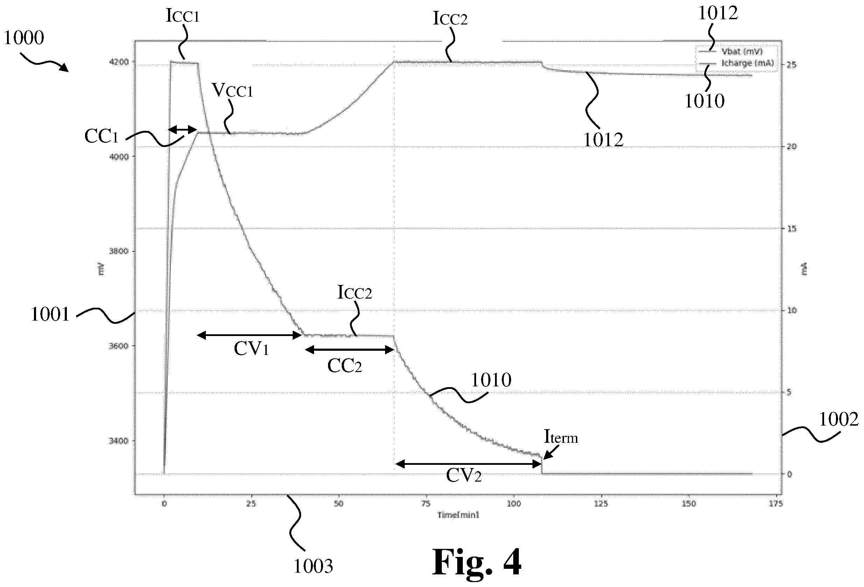

Each of the pair of hearing aids may have a similar structure (e.g. may be of the same type) as the hearing aids of FIGS. 4A-4B, each of the pair of hearing aids comprising a battery 904. Battery 904 of a first hearing aid 904A of the pair of hearing aids is characterized by a battery model that is different from the battery mode of battery 904 of a second hearing aid 900B of the pair of hearing aids.

The charging device 800 is configured to obtain a charging configuration 20A, 20B indicative of a charging characteristic of the battery 907 of each of the pair of hearing aids 900A, 900B. The charging configuration 20A, 20B comprises at least a first current reference value, a first voltage reference value, and a second current reference value.

In one or more example charging devices, the interface 803 is configured to obtain (e.g., receive) the charging configuration 20A, 20B from a memory of each of the pair of hearing aids 900A, 900B. In one or more example charging devices, the memory 801 is configured to store the charging configuration 20A, 20B. In one or more example charging devices, the processor 802 is configured to obtain (e.g., receive) the charging configuration 20A, 20B from the memory 801.

For example, the charging device 800 is configured to obtain (via interface 803), from an auxiliary device and/or one hearing aid of the pair of hearing aids 900A, 900B, one or more temperature values (e.g., from memory of the auxiliary device and/or from a memory of any hearing aid of the pair of hearing aids 900A, 900B). The auxiliary device may be one or more of: a telephone apparatus, a mobile telephone, a computer, a server, and a battery testing device.

The charging device 800 (e.g., the processor 802, e.g., the charging unit 806) is configured to determine, for each of the pair of hearing aids 900A, 900B, an operating window comprising a plurality of initial charging configurating points. Each of the plurality of initial charging configuration points is indicative of a current value, a voltage value, and a temperature value. Each of the plurality of initial charging configuration points being associated with a coulombic efficiency greater than or equal to a threshold.

The charging device 800 is configured to determine the operating window by performing an iterative charging and discharging procedure based on a maximum voltage value and a maximum current value, such as a manufacturer charging configuration 40A, 40B) The manufacturer charging configuration being indicative of a manufacturer charging characteristic or profile of the battery of the respective hearing aid.

In one or more example charging devices, the processor 802 is configured to perform the iterative charging and discharging procedure based on the manufacturer charging configuration 40A, 40B.

For example, the controller 805 is configured to obtain the manufacturer charging configuration 40A, 40B from the memory 801.

For example, the controller 805 is configured to control the charging unit 806. The controller 805 may be configured to control the charging unit 806 for performing the iterative charging and discharging procedure for each of the at least two hearing aids and for each of the one or more temperature values. Optionally, the charging unit 806 can comprise the controller 805. In one or more example charging devices, the charging unit 806 may additionally act as a controller. In one or more example charging devices, the charging unit 806 is configured to obtain the charging configuration 20 from the memory 801. For example, the charging unit 806 is configured to perform the iterative charging and discharging procedure for each of the at least two hearing aids for each of the one or more temperature values.

In the embodiment of FIG. 2, the controller 805 is configured to obtain the manufacturer charging configuration 40A, 40B from the memory 801, such as a manufacturer charging configuration for each of the pair of hearing aids 900A, 900B.

The controller 805 may configured to control the charging unit 806 to perform the iterative charging and discharging procedure. In one or more example charging devices, the iterative charging and discharging procedure is initialization procedure, such as a coulombic counting technique (e.g., by measuring the charge that goes in and out of the battery 907 of the respective hearing aid during a charge-discharge cycle, such as for calculating the battery of the respective hearing aid).

In one or more example charging devices, the controller 805 is configured to transmit, to the charging unit 806, a control message 42 indicative of the iterative charging and discharging procedure to be performed by the charging unit 806. The control message 42 may be indicative of a request from the controller 805 to the charging unit 806 for performing the iterative charging and discharging procedure.

In one or more example charging devices, the manufacturer charging configuration 40A, 40B comprises a maximum voltage value and a maximum current value. For example, the charging unit 806 is configured to obtain the manufacturer charging configuration from the controller 805. For example, the charging unit 806 is configured to determine a minimum voltage value based on the maximum voltage value. For example, the charging unit 806 is configured to determine a plurality of voltage values based on the maximum and minimum voltage values. For example, the charging unit 806 is configured to determine a minimum current value based on the maximum current value. For example, the charging unit 806 is configured to determine a plurality of current values based on the maximum and minimum current values.

In one or more example charging devices, the charging device 800 (e.g., the charging unit 806) is configured to perform the iterative charging and discharging procedure by setting an auxiliar voltage value to the minimum voltage value.

In one or more example charging devices, the charging device 800 (e.g., the charging unit 806) is configured to perform the iterative charging and discharging procedure by setting an auxiliar current value to the minimum current value.

In one or more example charging devices, the charging device 800 (e.g., the charging unit 806) is configured to perform the iterative charging and discharging procedure by iteratively performing, for each current value of the plurality of current values, the following steps until the auxiliar voltage value meets the maximum voltage value:
- determining a charging capacity of the battery 907 of the respective hearing aid of the pair of hearing aid 900A, 900B by applying (e.g., supplying) a charging current 44 to the battery 907 of the respective hearing aid of the pair of hearing aid 900A, 900B based on the respective current value (e.g., and the energy 9 provided by the power supply, such as power source 804) until the voltage 48 of the battery 907 of the respective hearing aid of the pair of hearing aid 900A, 900B meets the auxiliar voltage value;
- determining a discharging capacity of the battery 907 of the respective hearing aid of the pair of hearing aid 900A, 900B by applying a discharging current 46 to the battery 907 of the respective hearing aid of the pair of hearing aid 900A, 900B until the voltage 48 of the battery 907 of the respective hearing aid of the pair of hearing aid 900A, 900B meets a shutdown voltage;
- determining the coulombic efficiency based on the charging and discharging capacities of the respective battery; and
- determining whether the coulombic efficiency is greater than or equal to the threshold.

For example, the charging device 800 (e.g., the charging unit 806) is configured to determine whether the voltage 48 of the battery 907 of the respective hearing aid of the pair of hearing aid 900A, 900B meets the auxiliar voltage value. In one or more example charging devices, the charging device 800 (e.g., the interface 803) is configured to receive, from the each of the pair of hearing aid 900A, 900B (e.g., from an output unit of each of the pair of hearing aids 900A, 900B), the voltage 48 of the battery (e.g., a measurement of the voltage of the battery). In one or more example charging devices, the charging unit 806 is configured to determine whether the voltage 48 of the battery 907 of the respective hearing aid of the pair of hearing aid 900A, 900B meets the auxiliar voltage value.

For example, the charging device 800 (e.g., the charging unit 806) is configured to determine whether the voltage 48 of the battery 907 of the respective hearing aid of the pair of hearing aid 900A, 900B meets the shutdown voltage.

In one or more example charging devices, the charging device 800 (e.g., the charging unit 806) is configured to determine whether the coulombic efficiency is greater than or equal to the threshold by determining that the coulombic efficiency is greater than or equal to the threshold.

In one or more example charging devices, the charging device 800 (e.g., the charging unit 806) is configured to, upon determining that the coulombic efficiency is greater than or equal to the threshold, store the current value, the auxiliar voltage value, and the temperature value in form of an initial charging configurating point in the memory 801.

In one or more example charging devices, the charging device 800 (e.g., the charging unit 806) is configured to determine, upon determining that the coulombic efficiency is greater than or equal to the threshold, determine whether the auxiliar voltage value is less than the maximum voltage value.

In one or more example charging devices, the charging device 800 (e.g., the charging unit 806) is configured to determine whether the auxiliar voltage value is less than the maximum voltage value by determining that the auxiliar voltage value is less than the maximum voltage value.

In one or more example charging devices, the charging device 800 (e.g., the charging unit 806) is configured to, upon determining that the auxiliar voltage value is less than the maximum voltage value, set the auxiliar voltage value to the following voltage value of the plurality of voltage values.

In one or more example charging devices, the charging device 800 (e.g., the charging unit 806) is configured to determine whether the coulombic efficiency is greater than or equal to the threshold by determining that the coulombic efficiency is less than the threshold.

In one or more example charging devices, the charging device 800 (e.g., the charging unit 806) is configured to, upon determining that the coulombic efficiency is less than the threshold, determine whether the auxiliar current value is less than the maximum current value.

For example, the charging device 800 (e.g., the charging unit 806) is configured to determine that the auxiliar current value is less than the maximum current value. For example, the charging device 800 (e.g., the charging unit 806) is configured to, upon determining that the auxiliar current value is less than the maximum current value, setting the auxiliar current value to the following current value of the plurality of current values.

For example, the charging device 800 (e.g., the charging unit 806) is configured to determine that the auxiliar current value is equal to the maximum current value. For example, the charging device 800 (e.g., the charging unit 806) is configured to, upon determining that the auxiliar current value is equal to the maximum current value, stop performing the iterative charging and discharging procedure (e.g., for the respective temperature value of the one or more temperature values).

The charging device 800 (e.g., the processor 802, e.g., the charging unit 806) is configured to select (for each of the pair of hearing aid 900A, 900B) an initial charging configuration point from the operating window based on a first target value and a charging time. The first target value is indicative of an amount of charge or energy required by the respective hearing aid for a day of use. The charging time is indicative of a time required to charge the respective hearing aid for the day of use.

The first current reference value is the current value of the selected initial charging configuration point.

The charging device 800 (e.g., the processor 802, e.g., the charging unit 806) is configured to determine the first voltage reference value based on the first current reference value and the first target value.

The charging device 800 (e.g., the processor 802, e.g., the charging unit 806) is configured to determine the second current reference value based the maximum current value. The operating window comprises the second current reference value.

The first current reference value and the second current reference value may be the same for the pair of hearing aids 900A, 900B when the first target value is a charge capacity target. The first current reference value and the second current reference value may be different from one another for the pair of hearing aids 900A, 900B when the first target value is an energy target.

Optionally, the charging device 800 can be configured to transmit, to an auxiliary device and/or each of the pair of hearing aids, the plurality of initial charging configurating points. **In** other words, the charging device 800 may not select the initial charging configuration point from the operating window. Each of the pair of hearing aids and/or an auxiliary device in connection with the charging device 800 may be configured to perform such steps and, upon performing such steps, providing the charging device 800 with the selected initial charging configuration point. The charging device 800 may be configured to initiate the charging procedure upon obtaining the selected initial charging configuration point, and determining the first voltage reference value and the second current reference value.

For example, the first voltage reference value can be determined (e.g., by the charging device 800 or the auxiliary device) by determining a voltage value corresponding to the first target when applying a charging current based on the first current reference value to the battery of the respective hearing aid.

The charging device 800 is configured to perform, (e.g., for the temperature value of the selected initial charging configuration point of each of the pair of hearing aids) and for each of the at least two hearing aids 900A, 900B, a first charging procedure based on the respective charging configuration 20A, 20B. In one or more example charging devices, the processor 802 is configured to perform a first charging procedure based on the respective charging configuration 20A, 20B. For example, the controller 805 is configured to obtain the charging configuration 20A, 20B from the memory 801. For example, the controller 805 is configured to control the charging unit 806. The controller 805 may be configured to control the charging unit 806 for performing the first charging procedure for the temperature value of the selected initial charging configuration point and for each of the at least two hearing aids. The temperature value may be the same for the hearing aid 900A, 900B.

Optionally, the charging unit 806 can comprise the controller 805. In one or more example charging devices, the charging unit 806 may additionally act as a controller. In one or more example charging devices, the charging unit 806 is configured to obtain the charging configuration 20 from the memory 801. For example, the charging unit 806 is configured to perform the first charging procedure.

In the embodiment of FIG. 4B, the controller 805 is configured to obtain the respective charging configuration 20A, 20B from the memory 801. The controller 805 may configured to control the charging unit 806 to perform the first charging procedure. In one or more example charging devices, the first charging procedure is a CC-CV charging procedure. In other words, the charging unit 806 may be configured to perform a first CC-CV charging procedure. In one or more example charging devices, the first CC-CV charging procedure includes a first CC charging procedure 22A and a first CV charging procedure 22B. In one or more example charging devices, the controller 805 is configured to transmit, to the charging unit 806, a control message 22 indicative of the first charging procedure to be performed by the charging unit 806. The control message 22 may be indicative of a request from the controller 805 to the charging unit 806 for performing the first charging procedure.

The charging device 800 (e.g., the charging unit 806) is configured to perform the first charging procedure by applying a charging current 24 to the battery 907 based on the first current reference value. In one or more example charging devices, the charging device 800 (e.g., the charging unit 806) is configured to perform the first charging procedure by applying a charging current 24 to the battery 907 of the respective hearing aid of the pair of hearing aid 900A, 900B based on the first current reference value and the energy 9 provided by the power supply (e.g., power source 804). The charging current 24 is (e.g., substantially and/or approximately) constant. Applying the charging current 24 to the battery 907 of the respective hearing aid of the pair of hearing aid 900A, 900B causes an increase in a voltage of the battery 907. In one or more example charging devices, the charging unit 806 is configured to perform the first charging procedure based on the control message 22.

In one or more example charging devices, the charging unit 806 is configured to perform the first CC charging procedure 22A. In other words, the charging unit 806 is configured to charge the battery 907 of the respective hearing aid of the pair of hearing aid 900A, 900B at a constant current, e.g., by supplying the charging current 24 to the battery 907 of the respective hearing aid of the pair of hearing aid 900A, 900B. For example, the controller 805 is configured to control the charging unit 806 for performing the first charging procedure. For example, the controller 805 is configured to instruct the charging unit 806 to perform the first charging procedure. In other words, the control message 22 may be indicative of the first charging procedure to be performed by the charging unit 806. In one or more example charging devices, the charging unit 806 is configured to perform the first CC charging procedure 22A based on the charging configuration 20A, 20B. In one or more example charging devices, the charging unit 806 is configured to perform, for the temperature value of the selected initial charging configuration point and for each of the at least two hearing aids, the first CC charging procedure 22A based on the first current reference value.

The charging device 800 (e.g., the charging unit 806) is configured to perform the first charging procedure by determining whether the voltage 28 of the battery 907 of the respective hearing aid of the pair of hearing aid 900A, 900B meets the first voltage reference value. In one or more example charging devices, the charging device 800 (e.g., the interface 803) is configured to receive, from the each of the pair of hearing aid 900A, 900B (e.g., an output unit of each of the pair of hearing aids 900A, 900B), the voltage 28 of the battery (e.g., a measurement of the voltage of the battery). In one or more example charging devices, the charging unit 806 is configured to perform the first charging procedure by determining whether the voltage 28 of the battery 907 of the respective hearing aid of the pair of hearing aid 900A, 900B meets the first voltage reference value. In one or more example charging devices, the charging unit 806 is configured to determining whether the voltage 28 of the battery 907 of the respective hearing aid of the pair of hearing aid 900A, 900B meets the first voltage reference value during the first CC charging procedure 22A.

In one or more example charging devices, determining whether the voltage 28 of the battery 907 of the respective hearing aid of the pair of hearing aid 900A, 900B meets the first voltage reference value comprises determining that the voltage 28 of the battery 907 of the respective hearing aid of the pair of hearing aid 900A, 900B does not meet the first voltage reference value.

In one or more example charging devices, the charging device 800 (e.g., charging unit 806) is configured to, upon determining that the voltage 28 of the battery 907 of the respective hearing aid of the pair of hearing aid 900A, 900B does not meet the first voltage reference value, apply the charging current 24 to the battery 907 of the respective hearing aid of the pair of hearing aid 900A, 900B based on the first current reference value. In one or more example charging devices, the charging device 800 (e.g., charging unit 806) is configured to, upon determining that the voltage 28 of the battery 807 does not meet the first voltage reference value, determine whether the voltage 28 of the battery 907 of the respective hearing aid of the pair of hearing aid 900A, 900B meets the first voltage reference value. For example, the charging device 800 (e.g., charging unit 806) comprises applying the charging current 24 to the battery 907 of the respective hearing aid of the pair of hearing aid 900A, 900B until determining that the voltage 28 of the battery 907 of the respective hearing aid of the pair of hearing aid 900A, 900B meets the first voltage reference value. In one or more example charging devices, determining that the voltage 28 of the battery 907 of the respective hearing aid of the pair of hearing aid 900A, 900B does not meet the first voltage reference value can be seen as a condition to continue performing the first CC charging procedure 22A.

In one or more example charging devices, determining whether the voltage 28 of the battery 907 of the respective hearing aid of the pair of hearing aid 900A, 900B meets the first voltage reference value comprises determining that the voltage 28 of the battery 907 of the respective hearing aid of the pair of hearing aid 900A, 900B meets the first voltage reference value.

The charging device 800 (e.g., charging unit 806) is configured to perform the first charging procedure by, upon determining that the voltage 28 of the battery 907 of the respective hearing aid of the pair of hearing aid 900A, 900B meets the first voltage reference value, maintaining the voltage 28 of the battery 907 of the respective hearing aid of the pair of hearing aid 900A, 900B at the first voltage reference value. The charging device 800 (e.g., charging unit 806) is configured to maintain the voltage 28 of the battery 907 of the respective hearing aid of the pair of hearing aid 900A, 900B at the first voltage reference value by controlling the charging current 24 until the charging current 24 meets the second current reference value. In one or more example charging devices, determining that the voltage 28 of the battery 907 of the respective hearing aid of the pair of hearing aid 900A, 900B meets the first voltage reference value can be seen as a condition to perform the first CV charging procedure 22B (e.g., to switch from the first CC charging procedure 22A to the first CV charging procedure 22B).

In one or more example charging devices, determining that the charging current 24 meets the second current reference value can be seen as a condition to initiate a second charging procedure.

In one or more example charging devices, the charging device 800 (e.g., the charging unit 806) is configured to determine whether the charging current 24 meets the second current reference value. In one or more example charging devices, the charging device 800 (e.g., the charging unit 806) is configured to determine whether the charging 24 current meets the second current reference value by determining that the charging current 24 does not meet the second current reference value. In one or more example charging devices, the charging device 800 (e.g., the charging unit 806) is configured to, upon determining that the charging current 24 does not meet the second current reference value, maintaining the voltage 28 of the battery 907 of the respective hearing aid of the pair of hearing aid 900A, 900B at the first voltage reference value by controlling the charging current 24 until the charging current 24 meets the second current reference value. In one or more example charging devices, the charging device 800 (e.g., the charging unit 806) is configured to, upon determining that the charging current 24 does not meet the second current reference value, determining whether the charging current 24 meets the second current reference value. In other words, the second charging device 800 (e.g., the charging unit 806) may be configured to maintain the voltage 28 of the battery 907 of the respective hearing aid of the pair of hearing aid 900A, 900B at the first voltage reference value until determining that the charging current 24 meets the second current reference value. For example, determining that the charging current 24 does not meet the second current reference value can be seen as a condition to continue performing the first CV charging procedure 22B.

In one or more example charging devices, the charging device 800 (e.g., the charging unit 806) is configured to determining whether the charging current 24 meets the second current reference value by determining that the charging current 24 meets the second current reference value. In one or more example charging devices, determining that the charging current 24 meets the second current reference value can be seen as a condition for initiating (e.g., and/or performing) the second charging procedure. In one or more example charging devices, determining that the charging current 24 meets the second current reference value can be seen as a condition to perform the second CC charging procedure 26A (e.g., to switch from the first CV charging procedure 22B to the second CC charging procedure 26A).

In one or more example charging devices, the charging configuration 20A, 20B further comprises a second voltage reference value, and a second target value indicative of a state of health, SOH, of the battery 907. The second target value is indicative of an amount of charge or energy required by the respective hearing aid to be fully charged. In one or more example charging devices, the charging device 800 (e.g., the charging unit 806) is configured to perform the second charging procedure based on the charging configuration 20A, 20B.

The second voltage reference value and the second target value may be the same for the pair of hearing aids 900A, 900B. The second voltage reference value and the second target value may be different for the pair of hearing aids 900A, 900B.

In one or more example charging devices, the second charging procedure is a CC-CV charging procedure. In other words, the charging unit 806 may be configured to perform a second CC-CV charging procedure. In one or more example charging devices, the second CC-CV charging procedure includes a second CC charging procedure 26A and a second CV charging procedure 26B. In one or more example charging devices, the controller 805 may be configured to control the charging unit 806 to perform the second charging procedure. In one or more example charging devices, the control message 22 further indicates the second charging procedure to be performed by the charging unit 706. The controller 805 may instruct the charging unit 806 to perform the second charging procedure via the control message 22. The control message 22 may comprise the charging configuration 20A, 20B. In one or more example charging devices, the charging unit 806 is configured to perform the second charging procedure based on the control message 22.

In one or more example charging devices, the charging device 800 (e.g., the charging unit 806) is configured to perform the second charging procedure by determining that the charging current 24 meets the second current reference value.

In one or more example charging devices, the charging device 800 (e.g., the charging unit 806) is configured to perform the second charging procedure by, upon determining that the charging current 24 meets the second current reference value, applying the charging current 24 to the battery 907 of the respective hearing aid of the pair of hearing aid 900A, 900B based on the second current reference value. In one or more example charging devices, the charging current 24 is constant. In one or more example charging devices, applying the charging current 24 to the battery 907 of the respective hearing aid of the pair of hearing aid 900A, 900B causes an increase in the voltage 28 of the battery 907.

In one or more example charging devices, the charging device 800 (e.g., the charging unit 806) is configured to perform the second CC charging procedure 26A. In one or more example charging devices, the charging device 800 (e.g., the charging unit 806) is configured to perform the second CC charging procedure 26A by charging the battery 907 of the respective hearing aid of the pair of hearing aid 900A, 900B at a constant current, e.g., by supplying the charging current 24 to the battery 907 of the respective hearing aid of the pair of hearing aid 900A, 900B. For example, the controller 805 is configured to control the charging unit 806 for performing the second CC charging procedure 26A. For example, the controller 805 is configured to instruct the charging unit 806 to perform the second CC charging procedure 26A. In one or more example charging devices, the charging unit 806 is configured to perform the second CC charging procedure 26A based on the charging configuration 20A, 20B. In one or more example charging devices, the charging unit 806 is configured to perform the second CC charging procedure 26A based on the second current reference value.

In one or more example charging devices, the charging device 800 (e.g., the charging unit 806) is configured to perform the second charging procedure by determining whether the voltage 28 of the battery 907 of the respective hearing aid of the pair of hearing aid 900A, 900B meets the second constant voltage reference value.

In one or more example charging devices, the charging device 800 (e.g., the charging unit 806) is configured to determine whether the voltage 28 of the battery 907 of the respective hearing aid of the pair of hearing aid 900A, 900B meets the second voltage reference value by determining that the voltage 28 of the battery 907 of the respective hearing aid of the pair of hearing aid 900A, 900B does not meet the second voltage reference value.

In one or more example charging devices, the charging device 800 (e.g., the charging unit 806) is configured to, upon determining that the voltage of the battery 907 of the respective hearing aid of the pair of hearing aid 900A, 900B does not meet the second voltage reference value, apply the charging current 24 to the battery 907 of the respective hearing aid of the pair of hearing aid 900A, 900B based on the second current reference value. In other words, the charging device 800 (e.g., the charging unit 806) may be configured to carry on supplying the charging current 24 to the battery 907 of the respective hearing aid of the pair of hearing aid 900A, 900B based on the second current reference value. In one or more example charging devices, the charging device 800 (e.g., the charging unit 806) is configured to, upon determining that the voltage 28 of the battery 907 of the respective hearing aid of the pair of hearing aid 900A, 900B does not meet the second voltage reference value, determining whether the voltage 28 of the battery 907 of the respective hearing aid of the pair of hearing aid 900A, 900B meets the second voltage reference value. Stated differently, the charging device 800 (e.g., the charging unit 806) may be configured to applying the charging current 24 to the battery 907 of the respective hearing aid of the pair of hearing aid 900A, 900B until determining that the voltage 28 of the battery 907 of the respective hearing aid of the pair of hearing aid 900A, 900B meets the second voltage reference value. In one or more example charging devices, determining that the voltage 28 of the battery 907 of the respective hearing aid of the pair of hearing aid 900A, 900B does not meet the second voltage reference value can be seen as a condition to continue performing the second CC charging procedure 26A.

In one or more example charging devices, the charging device 800 (e.g., the charging unit 806) is configured to determine whether the voltage 28 of the battery 907 of the respective hearing aid of the pair of hearing aid 900A, 900B meets the second voltage reference value by determining that the voltage 28 of the battery 907 of the respective hearing aid of the pair of hearing aid 900A, 900B meets the second voltage reference value. In one or more example charging devices, determining that the voltage 28 of the battery 907 of the respective hearing aid of the pair of hearing aid 900A, 900B meets the second voltage reference value can be seen as a condition to perform the second CV charging procedure 26B (e.g., to switch from the second CC charging procedure 26A to the second CV charging procedure 26B).

In one or more example charging devices, the charging device 800 (e.g., the charging unit 806) is configured to the second charging procedure by, upon determining that the voltage 28 of the battery 907 of the respective hearing aid of the pair of hearing aid 900A, 900B meets the second constant voltage reference value, maintaining the voltage 28 of the battery 907 of the respective hearing aid of the pair of hearing aid 900A, 900B at the second voltage reference value.

In one or more example charging devices, the charging device 800 (e.g., the charging unit 806) is configured to perform the second CV charging procedure 26B. In one or more example charging devices, the charging current 24 supplied by the charging unit 806 to the battery 907 of the respective hearing aid of the pair of hearing aid 900A, 900B is configured to gradually decrease in relation to the second current reference value until the charging current 24 meets a current termination value. The charging configuration 20A, 20B of the respective hearing aid of the pair of hearing aid 900A, 900B may further comprise the current termination value 28. For example, the current termination value 28 indicates that the battery 907 of the respective hearing aid of the pair of hearing aid 900A, 900B is charged to either its currently maximum capacity or to its initial full capacity. In other words, the charging device 800 (e.g., the charging unit 806) is configured to stop performing the second charging procedure when the battery 907 of the respective hearing aid of the pair of hearing aid 900A, 900B is either charged to its original full capacity or to its currently maximum capacity.

In one or more example charging devices, the charging device 800 (e.g., the charging unit 806 and/or the controller 805) is configured to determine the second voltage reference value based on the second target value. In one or more example charging devices, the charging device 800 (e.g., the charging unit 806 and/or the controller 805) is configured to adjust the second voltage reference value comprised in the charging configuration 20A, 20B of the respective hearing aid of the pair of hearing aid 900A, 900B based on the second target value. In one or more example charging devices, the charging device 800 (e.g., the memory 801) is configured to store the second voltage reference value. In one or more example charging devices, the second target value comprises one or more of: an energy target and a charge capacity target. In one or more example charging devices, the second target value is a pre-determined value.

In one or more example charging devices, the charging device 800 (e.g., the controller 805) is configured to determine the second voltage reference value based on the target value before having the charging unit 806 obtained the respective charging configuration 20A, 20B from the memory 801 via the controller 805. Optionally, each of the pair of hearing aid 900A, 900B can be configured to determine the second voltage reference value based on the second target value. The charging configuration 20A, 20B of the respective hearing aid of the pair of hearing aid 900A, 900B may comprise the second voltage reference value determined based on the second target value, e.g., adjusted to the second target value. The controller 805 may be configured to provide the charging configuration 20A, 20B of the respective hearing aid of the pair of hearing aid 900A, 900B updated with the adjusted second voltage reference value to the charging unit 806. In one or more example charging devices, the charging device 800 (e.g., the charging unit 806) is configured to adjust the second voltage reference value based on the second target value after the charging unit 806 having obtained the charging configuration 20A, 20B of the respective hearing aid of the pair of hearing aid 900A, 900B from the memory 801 via the controller 805. Optionally, the controller 805 is configured to adjust the second voltage reference value based on the second target value, and provide the adjusted second voltage reference value to the charging unit 806.

In one or more example charging devices, the charging configuration 20, 20B of the respective hearing aid of the pair of hearing aid 900A, 900B is associated with one or more of: the hearing aid type, the battery type, and the first and second target values of the battery of each of the pair of hearing aids 900A, 900B.

Optionally, the charging device 800 can act as a power supply in relation to the other electronic device 900 when the each of the pair of hearing aids 900A, 900B comprises a controller (e.g., similar to controller 805 of FIG. 2) and a charging unit (e.g., similar to charging unit 806 of FIG. 2). Such embodiment is not shown in FIGS. 2A-2B. Stated differently, the each of the pair of hearing aids 900A, 900B may be configured to perform first charging procedure (e.g., similar to the charging device 800 of FIG. 2) and the second charging procedure (e.g., similar to the charging device 800 of FIG. 2).

In one or more example charging devices, the charging device 800 may act as a power supply in relation to each of the pair of hearing aids 900A, 900B when the each of the pair of hearing aids comprises a processor (e.g., similar to or processor 802 of FIG. 2) including a controller (e.g., similar to controller 805 of FIG. 2) and a charging unit (e.g., similar to charging unit 806 of FIG. 2). For example, each of the pair of hearing aids is configured to perform a power charging procedure by detecting a connection with the charging device 800. In one or more example charging devices, the charging device 807 is in communication with the each of the pair of hearing aids. In other words, the charging device 800 is in communication with the controller and/or the charging unit each of the pair of hearing aids 900A, 900B. The charging device 800 is in communication with the processor of the each of the pair of hearing aids 900A, 900B. The charging device 800 may have the functionalities associated with the processor 802, the controller 805, and/or the charging unit 806 deactivated when the charging device 800 solely acts as a power supply to each of the pair of hearing aids 900A, 900B. The charging device 800 may provide energy to the charging unit of each of the pair of hearing aids 900A, 900B, e.g., using the battery 807.

Interface 803 may be either configured for wired or wireless communications. The interface 303 may be configured for wireless communications via a wireless communication system, such as short-range wireless communications systems, such as Wi-Fi, Bluetooth, Zigbee, IEEE 802.11, IEEE 802.15, infrared and/or the like. Optionally, the interface 803 may comprise a connector for wired communications, via a connector, such as by using an electrical cable. The connector may connect each of the pair of hearing aid 900A, 900B to the charging device 800, e.g., for a wired connection.

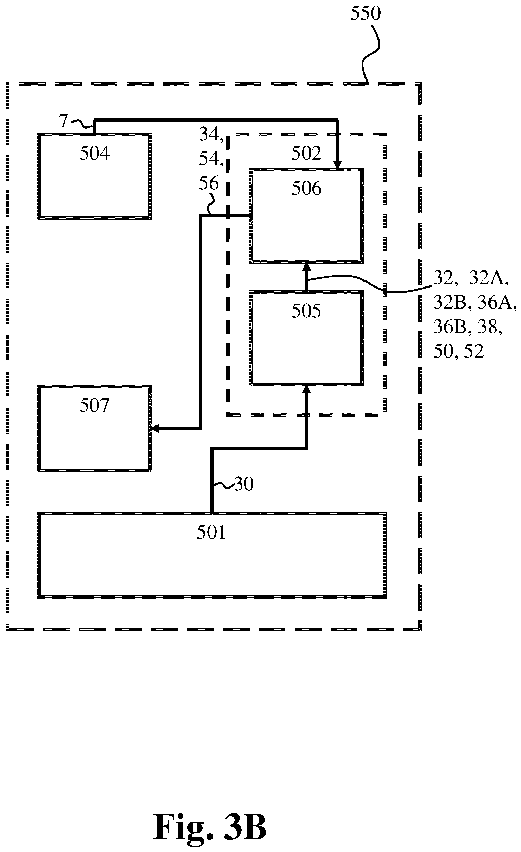

FIGS. 3A-3B illustrates an example hearing aid 500 according to the present disclosure. The hearing aid 500 can be seen as any hearing aid of least two hearing aids and/or of a pair of hearing aids comprised by a hearing system, with the battery of the at least two hearing aids being characterized by a battery model, the battery model of each of the at least two hearing aids being different from one another. In other words, structure of the hearing aid 500 corresponds to the structure of each of the at least two hearing aids. Each of the hearing aids 900A, 900B of FIG. 3 may comprise the same structure as hearing aid 500.

The hearing device 500 may be configured to be worn at an ear of a user. The hearing device 500 may be a hearable. The hearing aid 500 may comprise a hearing instrument, e.g., a hearing instrument adapted for being located at the ear or fully or partially in the ear canal of a user, e.g. a headset, an earphone, an ear protection device, or a combination thereof.

A hearing aid, e.g. a hearing instrument, may refer to a device, which is configured to improve, augment and/or protect the hearing capability of a user by receiving acoustic signals from the user's surroundings, generating corresponding audio signals, possibly modifying the audio signals, and providing the possibly modified audio signals as audible signals to at least one of the user's ears. Such audible signals may e.g., be provided in the form of acoustic signals radiated into the user's outer ears and/or acoustic signals transferred as mechanical vibrations to the user's inner ears through the bone structure of the user's head and/or through parts of the middle ear.

A hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

The hearing device 500 may be of the behind-the-ear (BTE) type, in-the-ear (ITE) type, in-the-canal (ITC) type, receiver-in-canal (RIC) type or receiver-in-the-ear (RITE) type. The hearing aid 500 may be a binaural hearing aid. A binaural hearing aid may be seen as a hearing system, such as a system comprising two hearing aids and being adapted to cooperatively provide audible signals to both of the user's ears.

FIG. 3A shows an embodiment of a BTE style hearing device 500 according to the present disclosure comprising a BTE-part with a loudspeaker and an ITE-part comprising an (possibly customized) ear mould connected by an acoustic propagation element. The BTE-part (BTE) is configured to be located at or behind an ear of a user and an ITE-part (ITE) adapted configured to be located in or at an ear canal of a user's ear and comprising a through-going opening allowing sound to be propagated via the connecting element to the ear drum of the user (cf. sound field SED). The BTE-part and the ITE-part are connected (e.g., electrically connected) by connecting element (IC) comprising an acoustic propagation channel, e.g. a hollow tube. The present disclosure is not limited to BTE style hearing aids.

In one or more example hearing aids, the BTE part comprises a loudspeaker SP configured to play into the connecting element. In one or more example hearing aids, the loudspeaker is connected by internal wiring in the BTE-part (cf. e.g. schematically illustrated as wiring Wx in the BTE-part) to relevant electronic circuitry of the hearing device 500, e.g. to a processor (DSP). In one or more example hearing aids, the BTE-parts comprises first and second input transducers, e.g. microphones (MBTE1 and MBTE2), respectively, which are used to pick up sounds from the environment of a user wearing the hearing device 500 (cf. sound field SBTE). In an embodiment, the ITE-part can comprise an ear-mould and is intended to allow a relatively large sound pressure level to be delivered to the ear drum of the user (e.g., to a user having a severe-to-profound hearing loss).

In one or more example hearing aids, the hearing device 500 (here the BTE-part) further comprises two (e.g. individually selectable) wireless receivers (WLR1, WLR2) configured to provide respective directly received auxiliary audio input and/or control or information signals. The wireless receivers may be configured to receive signals from another hearing device (e.g. of a binaural hearing system) or from any other communication device, e.g. telephone, such as a smartphone, or from a wireless microphone or a T-coil. The wireless receivers may be capable of receiving (and possibly also of transmitting) audio and/or control or information signals. The wireless receivers may be based on Bluetooth or similar technology, or may be based on near-field communication (e.g. inductive coupling).

In one or more example hearing aids, the BTE-part comprises a substrate SUB whereon a number of electronic components (MEM, FE, DSP) are mounted. In one or more example hearing aids, the BTE-part comprises a configurable signal processor (DSP) and memory (MEM) accessible therefrom. The signal processor (DSP) may form part of an integrated circuit, e.g. a (mainly) digital integrated circuit.

The BTE-part comprises an output transducer (SP) configured to provide an enhanced output signal as stimuli perceivable by the user as sound based on an enhanced (e.g. amplified, frequency shaped) audio signal from the signal processor (DSP) or a signal derived therefrom.

In the embodiment of FIG. 4A, the output transducer takes the form of a loudspeaker (receiver) (SP) for converting an electric signal to an acoustic signal. Alternatively or additionally, the enhanced audio signal from the signal processor (DSP) may be further processed and/or transmitted to another device depending on the specific application scenario.

In the embodiment of FIG. 3A, a (far-field) (target) sound source S is propagated (and mixed with other sounds (e.g. noise) of the environment) to respective sound fields at the BTE microphones (M_{BTE1}, M_{BTE2}) of the BTE-part.

The hearing device 500, e.g. a hearing aid (e.g. the processor (DSP)), may be configured to provide a frequency dependent gain and/or a level dependent compression and/or a transposition (with or without frequency compression) of one or frequency ranges to one or more other frequency ranges, e.g. to compensate for a hearing impairment of a user.

In one or more example hearing aids, the hearing aid 500 is a portable device comprising a battery BAT, e.g. a rechargeable battery, e.g. based on Li-Ion battery technology, e.g. for energizing electronic components of the BTE- and possibly ITE-parts.

In one or more example hearing aids, a charging processing unit 550 can comprise the battery of the hearing aid 500. The charging processing unit 550 may be configured to perform a charging procedure, e.g., to charge the battery BAT. In one or more example hearing aids, the charging processing unit 500 can also comprise other components suitable for carrying out a charging procedure, e.g., a charging unit, a controller, a memory and/or a power source.

FIG. 3B illustrates the charging processing unit 505 of the hearing aid 500. In one or more example hearing aids, the charging processing unit 505 comprises one or more of: a memory 501, a processor 502, an interface, and a power source 504, and a battery 507. The battery 507 is battery BAT of FIG. 3A. In one or more example hearing aids, the memory 501, the processor 502, the power source 504, and the battery 507 may not be incorporated in the charging processing unit 500. In one or more example hearing aids, the memory 501, the processor 502, the interface 503, the power source 504, and the battery 507 may be incorporated by the hearing aid 500, e.g., as separate units.

In the embodiment of FIGS. 3A-3B, the charging processing unit 500 comprises the memory 501, the processor 502, the power source 504, and the battery 507. The processor 502 may comprise the controller 505 and the charging unit 506. Optionally, the hearing aid 500 and/or the charging processing unit 500 comprise the memory 501, the interface (e.g., input unit), the power source 504, the controller 505, the charging unit 506, and the battery 507. In other words, the controller 505 and the charging unit 506 may not be part of the processor 502. The charging unit 506 may comprise the controller 505. Stated differently, the controller 505 may be incorporated in the charging unit 506.

The charging processing unit 550 may be configured to perform some steps or all steps of the method disclosed in FIGS. 1A-1D.

The hearing aid 500 may be configured to charge the battery 507 (e.g., when the battery level of the hearing aid 500 is below a threshold, such as when the hearing aid 500 is running out of power. The user of the hearing aid 500 can initiate a charging procedure by connecting the hearing aid 500 to a power supply. The power supply may be a power supply of 5V. In other words, the supply voltage into the charging port (e.g., the power source unit 504) may be of 5V. The user of the hearing aid 500 can initiate a charging procedure by connecting the hearing aid 500 to a charging device (e.g., charging device 800 of FIG. 3). The user of the hearing aid 500 can initiate a charging procedure by connecting the hearing aid 500 to a charging device solely acting as a power supply (e.g., as discussed in FIG. 2). For example, the hearing aid 500 is configured to determine that a power supply is connected to the hearing aid 500. For example, the power source 504 can be seen as a power supply. For example, the hearing aid 500 is configured to determine that a power charging procedure (e.g., an iterative charging and discharging procedure and/or an n-step CC-CV charging procedure) has been initiated by detecting activation of the power source 504. In one or more example hearing aids, the power supply (e.g., power source 504) is configured to provide energy 7 to the charging unit 506.

The hearing aid 500 (e.g., the charging processing unit 550) is configured to obtain a charging configuration 30 indicative of the charging profile of the battery 507. The charging configuration 30 comprises at least a first current reference value, a first voltage reference value, a first target value, and a second current reference value.

In one or more example hearing aids, the processor 502 is configured to obtain (e.g., receive) the charging configuration 30 from the memory 501. In one or more example hearing aids, the processor 502 is configured to receive the charging configuration 30 from the memory 501 when the hearing aid 500 is configured to charge the battery 507.

For example, the hearing device 500 is configured to obtain (via an input unit), from an auxiliary device and/or other hearing aid of a pair of hearing aids, one or more temperature values (e.g., from memory of the auxiliary device and/or from a memory of other hearing aid of a pair of hearing aids). The auxiliary device may be one or more of: a telephone apparatus, a mobile telephone, a computer, a server, and a battery testing device.

The hearing device 500 (e.g., the processor 502, e.g., the charging unit 506) is configured to determine an operating window comprising a plurality of initial charging configurating points. Each of the plurality of initial charging configuration points is indicative of a current value, a voltage value, and a temperature value, each of the plurality of initial charging configuration points being associated with a coulombic efficiency greater than or equal to a threshold.
hearing device 500 (e.g., the processor 502, e.g., the charging unit 506) is configured to determine the operating window comprising a plurality of initial charging configurating points by performing an iterative charging and discharging procedure based on a manufacturer charging configuration 50. The manufacturer charging configuration being indicative of a manufacturer charging characteristic of the battery of the hearing aid. The memory 501 or the memory of the auxiliary device may be configured to store the manufacturer charging configuration 50 upon obtaining (e.g., receiving) such manufacturer charging configuration.

In one or more example hearing aids, the processor 502 is configured to perform the iterative charging and discharging procedure based on the manufacturer charging configuration 50.

For example, the controller 505 is configured to obtain the manufacturer charging configuration 50 from the memory 801.

For example, the controller 505 is configured to control the charging unit 506. The controller 505 may be configured to control the charging unit 506 for performing the iterative charging and discharging procedure for each of the one or more temperature values. Optionally, the charging unit 506 can comprise the controller 505. In one or more example hearing aids, the charging unit 506 may additionally act as a controller. In one or more example hearing aids, the charging unit 506 is configured to obtain the charging configuration 50 from the memory 501. For example, the charging unit 506 is configured to perform the iterative charging and discharging procedure for each of the one or more temperature values.

The controller 505 may configured to control the charging unit 506 to perform the iterative charging and discharging procedure. In one or more example aids, the iterative charging and discharging procedure is an initialization procedure, such as a coulombic counting technique (e.g., by measuring the charge that goes in and out of the battery 507 of the respective hearing aid during a charge-discharge cycle, such as for calculating the battery of the hearing aid 500).

In one or more example hearing aids, the controller 505 is configured to transmit, to the charging unit 506, a control message 52 indicative of the iterative charging and discharging procedure to be performed by the charging unit 506. The control message 52 may be indicative of a request from the controller 505 to the charging unit 506 for performing the iterative charging and discharging procedure.

In one or more example hearing aids, the manufacturer charging configuration 50 comprises a maximum voltage value and a maximum current value. For example, the charging unit 506 is configured to obtain the manufacturer charging configuration from the controller 505. For example, the charging unit 506 is configured to determine a minimum voltage value based on the maximum voltage value. For example, the charging unit 506 is configured to determine a plurality of voltage values based on the maximum and minimum voltage values. For example, the charging unit 506 is configured to determine a minimum current value based on the maximum current value. For example, the charging unit 506 is configured to determine a plurality of current values based on the maximum and minimum current values.

In one or more example hearing aids, the hearing aid 500 (e.g., the charging unit 506) is configured to perform the iterative charging and discharging procedure by setting an auxiliar voltage value to the minimum voltage value.

In one or more example hearing aids, the hearing aid 500 (e.g., the charging unit 506) is configured to perform the iterative charging and discharging procedure by setting an auxiliar current value to the minimum current value.

In one or more example hearing aids, the hearing aid 500 (e.g., the charging unit 506) is configured to perform the iterative charging and discharging procedure by iteratively performing, for each current value of the plurality of current values, the following steps until the auxiliar voltage value meets the maximum voltage value:
- determining a charging capacity of the battery 507 by applying (e.g., supplying) a charging current 54 to the battery 507 based on the respective current value (e.g., and the energy 7 provided by the power supply) until the voltage of the battery 507 meets the auxiliar voltage value;
- determining a discharging capacity of the battery 507 by applying a discharging current 56 to the battery 507 until the voltage of the battery 507 meets a shutdown voltage;
- determining the coulombic efficiency based on the charging and discharging capacities of the respective battery; and
- determining whether the coulombic efficiency is greater than or equal to the threshold.

For example, the hearing aid 500 (e.g., the charging unit 506) is configured to determine whether the voltage of the battery 507 meets the auxiliar voltage value. In one or more example hearing aids, the hearing aid 500 is configured to determine whether the voltage of the battery 507 meets the auxiliar voltage value.

For example, the hearing aid 500 (e.g., the charging unit 506) is configured to determine whether the voltage of the battery 507 meets the shutdown voltage.

In one or more example hearing aids, the hearing aids 500 (e.g., the charging unit 506) is configured to determine whether the coulombic efficiency is greater than or equal to the threshold by determining that the coulombic efficiency is greater than or equal to the threshold.

In one or more example hearing aids, the charging device 500 (e.g., the charging unit 506) is configured to, upon determining that the coulombic efficiency is greater than or equal to the threshold, store the current value, the auxiliar voltage value, and the temperature value in form of an initial charging configurating point in the memory 501.

In one or more example hearing aids, the charging device 500 (e.g., the charging unit 506) is configured to determine, upon determining that the coulombic efficiency is greater than or equal to the threshold, determine whether the auxiliar voltage value is less than the maximum voltage value.

In one or more example hearing aids, the hearing aids 500 (e.g., the charging unit 506) is configured to determine whether the auxiliar voltage value is less than the maximum voltage value by determining that the auxiliar voltage value is less than the maximum voltage value.

In one or more example hearing aids, the hearing aid 500 (e.g., the charging unit 506) is configured to, upon determining that the auxiliar voltage value is less than the maximum voltage value, set the auxiliar voltage value to the following voltage value of the plurality of voltage values.

In one or more example hearing aids, the charging device 500 (e.g., the charging unit 506) is configured to determine whether the coulombic efficiency is greater than or equal to the threshold by determining that the coulombic efficiency is less than the threshold.

In one or more example hearing aids, the hearing aids 500 (e.g., the charging unit 506) is configured to, upon determining that the coulombic efficiency is less than the threshold, determine whether the auxiliar current value is less than the maximum current value.

For example, the hearing aid 500 (e.g., the charging unit 506) is configured to determine that the auxiliar current value is less than the maximum current value. For example, the hearing aids 500 (e.g., the charging unit 506) is configured to, upon determining that the auxiliar current value is less than the maximum current value, setting the auxiliar current value to the following current value of the plurality of current values.

For example, the hearing aids 500 (e.g., the charging unit 506) is configured to determine that the auxiliar current value is equal to the maximum current value. For example, the hearing aids 500 (e.g., the charging unit 506) is configured to, upon determining that the auxiliar current value is equal to the maximum current value, stop performing the iterative charging and discharging procedure (e.g., for the respective temperature value of the one or more temperature values).

For example, the hearing aid 500 is configured to provide, an auxiliary device (e.g. a computer), with the plurality of initial charging configurating points. The auxiliary device may be configured to receive, from a pair of hearing aids comprising the hearing 500 and another hearing aid sharing the same structure of hearing aid 500 but having a different battery model, the plurality of initial charging configurating points, respectively. The auxiliary device (e.g., a processor of such device) may be configured to determine one or more initial charging configuration points common to the pair of hearing aids by comparing the plurality of initial charging configuration points of the pair of hearing aids with one another.

For example, the auxiliary device (e.g., a processor of such device) is configured to select an initial charging configuration point from the operating window based on a first target value and a charging time. The first target value is indicative of an amount of charge or energy required by the respective hearing aid for a day of use. The charging time is indicative of a time required to charge the respective hearing aid for the day of use.

The first current reference value is the current value of the selected initial charging configuration point.

The auxiliary device (e.g., a processor of such device) is configured to determine the second current reference value based the maximum current value. The operating window comprises the second current reference value.

The first current reference value and the second current reference value may be the same for the pair of hearing aids 900A, 900B when the first target value is a charge capacity target. The first current reference value and the second current reference value may be different from one another for the pair of hearing aids 900A, 900B when the first target value is an energy target.

For example, the auxiliary device (e.g., a processor of such device) is configured to provide, each of the pair of hearing aids, the selected initial charging configuration point (e.g., the first current reference value, the first voltage reference value, the second current reference value).

Optionally, the hearing aid 500 can be configured to receive, from the other hearing aid of the pair of hearing aids, the respective plurality of initial charging configurating points. The hearing aid (e.g., the processor 502, e.g., the charging unit 506) may be configured to determine the operating window.

For example, the hearing aid 500 (e.g., the processor 502, e.g., the charging unit 506) is configured to select the initial charging configuration point from the operating window based on a first target value and a charging time.

For example, the hearing aid is configured to provide, the other hearing aid of the pair of hearing aids, the selected initial charging configuration point. Each of the pair hearing aids may be configured to determine the respective first voltage reference value and the respective second current reference value. One of the pair hearing aids may be configured to determine the first voltage reference value and the second current reference value of each of the pair of hearing aids and provide, to the other hearing aid of the pair of hearing aids, the first voltage reference value and the second current reference value of the other hearing aid of the pair of hearing aids.

For example, the first voltage reference value can be determined (e.g., by each of the pair of hearing aids, one of the pair of hearing aids or by the auxiliary device) by determining a voltage value corresponding to the first target when applying a charging current based on the first current reference value to the battery of the respective hearing aid.

The hearing aid 500 (e.g., the charging processing unit 550) is configured to perform, for the temperature value of the selected initial charging configuration point, a first charging procedure based on the charging configuration 30. In one or more example hearing aids, the processor 502 is configured to perform a first charging procedure based on the charging configuration 30. For example, the controller 505 is configured to obtain the charging configuration 30 from the memory 501. For example, the controller 505 is configured to control the charging unit 506. The controller 505 may be configured to control the charging unit 506 for performing the first charging procedure for the temperature value of the selected initial charging configuration point. The temperature value may be the same for both the hearing aids of the pair of hearing aids.

Optionally, the charging unit 506 can comprise the controller 505. In one or more example hearing aids, the charging unit 506 may additionally act as a controller. In one or more example hearing aids, the charging unit 506 is configured to obtain the charging configuration 30 from the memory 501. For example, the charging unit 508 is configured to perform the first charging procedure. For example, the charging unit 506 comprising the controller 505 can be seen as an IC charger.

In the embodiment of FIG. 3B, the controller 505 is configured to obtain the charging configuration 30 from the memory 501. The controller 505 may configured to control the charging unit 506 to perform the first charging procedure. In one or more example hearing aids, the first charging procedure is a CC-CV charging procedure. In other words, the charging unit 506 may be configured to perform a first CC-CV charging procedure. In one or more example hearing aids, the first CC-CV charging procedure includes a first CC charging procedure 32A and a first CV charging procedure 32B. In one or more example hearing aids, the controller 505 is configured to transmit, to the charging unit 506, a control message 32 indicative of the first charging procedure to be performed by the charging unit 506. The control message 32 may be indicative of a request from the controller 505 to the charging unit 506 for performing the first charging procedure.

The hearing aid 500 (e.g., the charging unit 506) is configured to perform the first charging procedure by applying a charging current 34 to the battery 507 based on the first current reference value. In one or more example hearing devices, the hearing aid 500 (e.g., the charging unit 506) is configured to perform the first charging procedure by applying a charging current 34 to the battery 507 based on the first current reference value and the energy 7 provided by the power supply (e.g., power source 504). The charging current 34 is (e.g., substantially and/or approximately) constant. Applying the charging current 34 to the battery 507 causes an increase in a voltage of the battery 507. In one or more example hearing aids, the charging unit 506 is configured to perform the first charging procedure based on the control message 32.

In one or more example hearing aids, the charging unit 506 is configured to perform the first CC charging procedure 32A. In other words, the charging unit 506 is configured to charge the battery 507 at a constant current, e.g., by supplying the charging current 34 to the battery 507. For example, the controller 505 is configured to control the charging unit 506 for performing the first charging procedure. For example, the controller 505 is configured to instruct the charging unit 506 to perform the first charging procedure. In other words, the control message 32 may be indicative of the first charging procedure to be performed by the charging unit 506. In one or more example hearing aids, the charging unit 506 is configured to perform the first CC charging procedure 32A based on the charging configuration 30. In one or more example hearing aids, the charging unit 506 is configured to perform the first CC charging procedure 32A based on the first current reference value.

The hearing aid 500 (e.g., the charging unit 506) is configured to perform the first charging procedure by determining whether the voltage of the battery 507 meets the first voltage reference value. In one or more example hearing aids, the charging unit 506 is configured to perform the first charging procedure by determining whether the voltage of the battery 507 meets the first voltage reference value. In one or more example hearing aids, the charging unit 706 is configured to determining whether the voltage of the battery 507 meets the first voltage reference value during the first CC charging procedure 32A.

In one or more example hearing aids, determining whether the voltage of the battery 507 meets the first voltage reference value comprises determining that the voltage of the battery 507 does not meet the first voltage reference value.

In one or more example hearing aids, the hearing aid 500 (e.g., charging unit 506) is configured to, upon determining that the voltage of the battery 507 does not meet the first voltage reference value, apply the charging current 34 to the battery 507 based on the first current reference value. In one or more example hearing aids, the hearing aid 500 (e.g., charging unit 506) is configured to, upon determining that the voltage of the battery 507 does not meet the first voltage reference value, determine whether the voltage of the battery 507 meets the first voltage reference value. For example, the hearing aid 500 (e.g., charging unit 506) comprises applying the charging current 34 to the battery 507 until determining that the voltage of the battery 507 meets the first voltage reference value. In one or more example hearing aids, determining that the voltage of the battery 507 does not meet the first voltage reference value can be seen as a condition to continue performing the first CC charging procedure 32A.

In one or more hearing devices, determining whether the voltage of the battery 507 meets the first voltage reference value comprises determining that the voltage of the battery 507 meets the first voltage reference value.

The hearing aid 500 (e.g., charging unit 506) is configured to perform the first charging procedure by, upon determining that the voltage of the battery 507 meets the first voltage reference value, maintaining the voltage of the battery 507 at the first voltage reference value. The hearing aid 500 (e.g., charging unit 506) is configured to maintain the voltage of the battery 507 at the first voltage reference value by controlling the charging current 34 until the charging current 34 meets the second current reference value. In one or more example hearing aids, determining that the voltage of the battery 507 meets the first voltage reference value can be seen as a condition to perform the first CV charging procedure 32B (e.g., to switch from the first CC charging procedure 32A to the first CV charging procedure 32B).

In one or more example hearing aids, determining that the charging current 34 meets the second current reference value can be seen as a condition to initiate a second charging procedure.

In one or more example hearing aids, the hearing aid 500 (e.g., the charging unit 506) is configured to determine whether the charging current 34 meets the second current reference value. In one or more example hearing aids, the hearing aid 500 (e.g., the charging unit 506) is configured to determine whether the charging current 34 meets the second current reference value by determining that the charging current 34 does not meet the second current reference value. In one or more example hearing aids, the hearing aid 500 (e.g., the charging unit 506) is configured to, upon determining that the charging current 34 does not meet the second current reference value, maintaining the voltage of the battery 507 at the first voltage reference value by controlling the charging current 34 until the charging current 34 meets the second current reference value. In one or more example hearing aids, the hearing aid 500 (e.g., the charging unit 506) is configured to, upon determining that the charging current 34 does not meet the second current reference value, determining whether the charging current 34 meets the second current reference value. In other words, the hearing aid 500 (e.g., the charging unit 506) may be configured to maintain the voltage of the battery 507 at the first voltage reference value until determining that the charging current 34 meets the second current reference value. For example, determining that the charging current 34 does not meet the second current reference value can be seen as a condition to continue performing the first CV charging procedure 32B.

In one or more example hearing aids, the hearing aid 500 (e.g., the charging unit 506) is configured to determining whether the charging current 34 meets the second current reference value by determining that the charging current 34 meets the second current reference value. In one or more example hearing aids, determining that the charging current 34 meets the second current reference value can be seen as a condition for initiating (e.g., and/or performing) the second charging procedure. In one or more example hearing aids, determining that the charging current 34 meets the second current reference value can be seen as a condition to perform the second CC charging procedure 36A (e.g., to switch from the first CV charging procedure 32B to the second CC charging procedure 36A).

In one or more example hearing aids, the charging configuration 30 further comprises a second voltage reference value, and a second target value indicative of a state of health, SOH, of the battery 507. The second target value is indicative of an amount of charge or energy required by the hearing aid 500 to be fully charged. In one or more example hearing aids, the hearing aid 500 (e.g., the charging unit 506) is configured to perform the second charging procedure based on the charging configuration 30.

In one or more example hearing aids, the second charging procedure is a CC-CV charging procedure. In other words, the charging unit 506 may be configured to perform a second CC-CV charging procedure. In one or more example hearing aids, the second CC-CV charging procedure includes a second CC charging procedure 36A and a second CV charging procedure 36B. In one or more example hearing aids, the controller 505 may be configured to control the charging unit 506 to perform the second charging procedure. In one or more example hearing aids, the control message 32 further indicates the second charging procedure to be performed by the charging unit 506. In other words, the control message 32 may comprise the charging configuration 30. In one or more example hearing aids, the charging unit 506 is configured to perform the second charging procedure based on the control message 32.

In one or more example hearing aids, the hearing aid 500 (e.g., the charging unit 506) is configured to perform the second charging procedure by determining that the charging current 34 meets the second current reference value.

In one or more example hearing aids, the hearing aid 500 (e.g., the charging unit 506) is configured to perform the second charging procedure by, upon determining that the charging current 34 meets the second current reference value, applying the charging current 34 to the battery based on the second current reference value. In one or more example hearing aids, the charging current 34 is constant. In one or more example hearing aids, applying the charging current 34 to the battery 507 causes an increase in the voltage of the battery 507.

In one or more example hearing aids, the hearing aid 500 (e.g., the charging unit 506) is configured to perform the second CC charging procedure 36A. In one or more example hearing aids, the hearing aid 500 (e.g., the charging unit 506) is configured to perform the second CC charging procedure 36A by charging the battery 507 at a constant current, e.g., e.g., by supplying the charging current 34 to the battery 507. For example, the controller 505 is configured to control the charging unit 506 for performing the second CC charging procedure 36A. For example, the controller 505 is configured to instruct the charging unit 506 to perform the second CC charging procedure 36A. In one or more example hearing aids, the charging unit 506 is configured to perform the second CC charging procedure 56A based on the charging configuration 30. In one or more example hearing aids, the charging unit 506 is configured to perform the second CC charging procedure 36A based on the second current reference value.

In one or more example hearing aids, the hearing aid 500 (e.g., the charging unit 506) is configured to perform the second charging procedure by determining whether the voltage of the battery 507 meets the second constant voltage reference value.

In one or more example hearing aids, the hearing aid 500 (e.g., the charging unit 506) is configured to determine whether the voltage of the battery 507 meets the second voltage reference value by determining that the voltage of the battery 507 does not meet the second voltage reference value.

In one or more example hearing aids, the hearing aid 500 (e.g., the charging unit 506) is configured to, upon determining that the voltage of the battery 507 does not meet the second voltage reference value, apply the charging current 34 to the battery 507 based on the second current reference value. In other words, the hearing aid 500 (e.g., the charging unit 506) may be configured to carry on supplying the charging current 34 to the battery 507 based on the second current reference value. In one or more example hearing aids, hearing aid 500 (e.g., the charging unit 506) is configured to, upon determining that the voltage of the battery 507 does not meet the second voltage reference value, determining whether the voltage of the battery 507 meets the second voltage reference value. Stated differently, the hearing aid 500 (e.g., the charging unit 506) may be configured to apply the charging current 34 to the battery 507 until determining that the voltage of the battery 507 meets the second voltage reference value. In one or more example hearing aids, determining that the voltage of the battery 507 does not meet the second voltage reference value can be seen as a condition to continue performing the second CC charging procedure 36A.

In one or more example hearing aids, the hearing aid 500 (e.g., the charging unit 506) is configured to determine whether the voltage of the battery 507 meets the second voltage reference value by determining that the voltage of the battery 507 meets the second voltage reference value. In one or more example hearing aids, determining that the voltage of the battery 507 meets the second voltage reference value can be seen as a condition to perform the second CV charging procedure 36B (e.g., to switch from the second CC charging procedure 36A to the second CV charging procedure 36B).

In one or more example hearing aids, the hearing aid 500 (e.g., the charging unit 506) is configured to the second charging procedure by, upon determining that the voltage of the battery 507 meets the second constant voltage reference value, maintaining the voltage of the battery 507 at the second voltage reference value.

In one or more example hearing aids, the hearing aid 500 (e.g., the charging unit 506) is configured to perform the second CV charging procedure 36B. In one or more example hearing aids, the charging current 34 supplied by the charging unit 506 to the battery 507 is configured to gradually decrease in relation to the second current reference value until the charging current 34 meets a current termination value 38. The charging configuration 30 may further comprise the current termination value 38. For example, the current termination value 38 indicates that the battery 507 is charged to either its currently maximum capacity or to its initial full capacity. In other words, the hearing aid 500 (e.g., the charging unit 506) is configured to stop performing the second charging procedure when the battery 507 is either charged to its original full capacity or to its currently maximum capacity.

In one or more example hearing aids, the hearing aid 500 (e.g., the charging unit 506 and/or the controller 505) is configured to determine the second voltage reference value based on the second target value. In one or more example hearing aids, the hearing aid 500 (e.g., the charging unit 506 and/or the controller 505) is configured to adjust the second voltage reference value comprised in the charging configuration 30 based on the second target value. In one or more example hearing aids, the hearing aid 500 (e.g., the memory 501) is configured to store the second voltage reference value. In one or more example hearing aids, the second target value comprises one or more of: an energy target and a capacity target. In one or more example hearing aids, a second target value is a pre-determined value.

In one or more example hearing aids, the hearing aid 500 (e.g., the controller 505) is configured to determine the second voltage reference value based on the second target value before having the charging unit 506 obtained the charging configuration 30 from the memory 501 via the controller 505. The charging configuration 30 may comprise the second voltage reference value determined based on the target value, e.g., adjusted to the second target value. The controller 505 may be configured to provide the charging configuration 30 updated with the adjusted second voltage reference value to the charging unit 506. In one or more example hearing aids, the hearing aid 500 (e.g., the charging unit 506) is configured to adjust the second voltage reference value based on the target value after the charging unit 506 having obtained the charging configuration 30 from the memory 501 via the controller 505.

In one or more example hearing aids, the charging configuration 30 is associated with one or more of: the hearing aid type, the battery type, and the first and second target values (e.g., SOH of the battery 507).

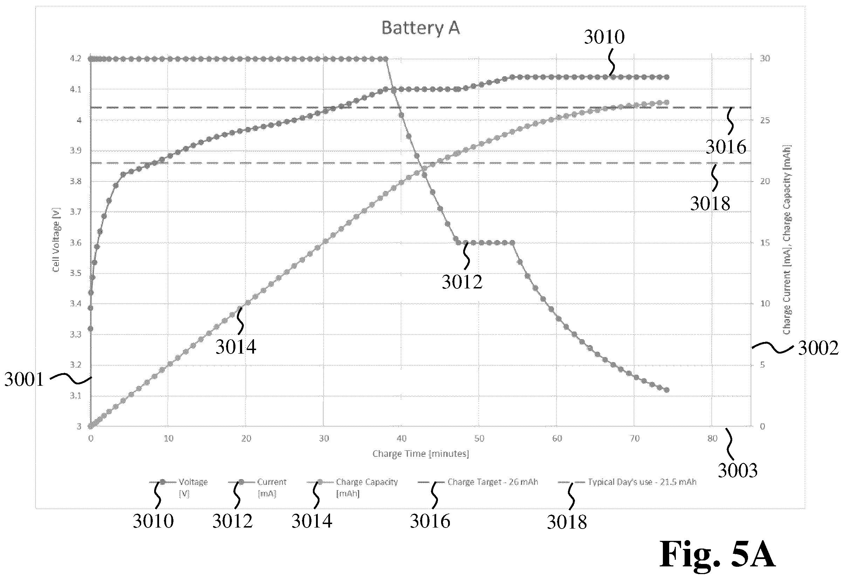

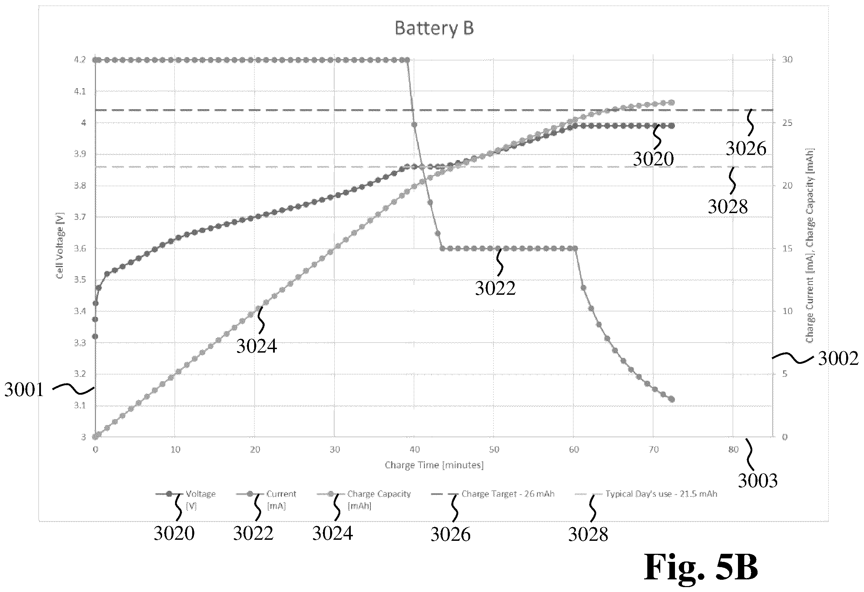

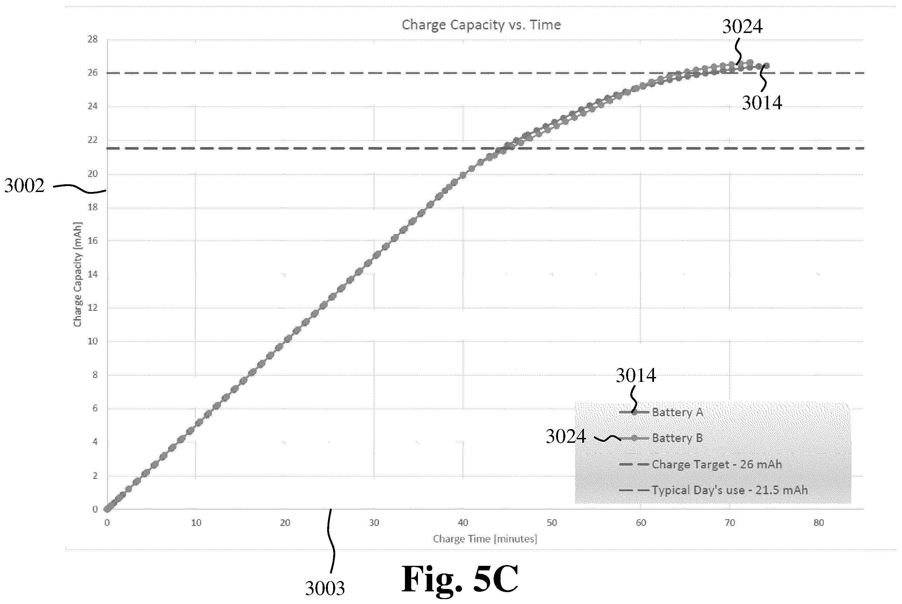

FIG. 4 shows a graph 1000 illustrating an example first charging procedure and an example second charging procedure according to the present disclosure. For example, the first charging procedure and the second charging procedure can be performed by an electronic device (e.g., charging device 800 of FIG. 3, hearing aid 500 of FIGS. 4A-4B). FIG. 5 illustrates a CC-CV-CC-CV charging procedure. The first charging procedure comprises a first CC charging procedure CC₁ and a first CV charging procedure CV₁. The second charging procedure comprises a second CC charging procedure CC₂ and a second CV charging procedure CV₂. The first vertical axis 1001 represents a voltage in mV. The second vertical axis 1002 represents a current in mA. The horizontal axis 1003 represents the charging time in minutes. Curve 1010 illustrates the variation of a charging current over the charging time, e.g., during the CC-CV-CC-CV charging procedure. Curve 1012 illustrates the variation of a voltage of a battery of an electronic device over the charging time, e.g., during the CC-CV-CC-CV charging procedure.

The electronic device may be configured to perform the first CC charging procedure CC₁. For example, performing the first CC charging procedure CC₁ comprises applying a charging current I_{charge} to the battery based on the first current reference value I_{CC1} (e.g., the charging current Icharge = I_{CC1}). The charging current Icharge may comprise minor fluctuations over charging time, e.g., during the first CC charging phase CC₁. In other words, the charging current I_{charge} may be substantially constant and/or approximately constant. The charging current Icharge comprising minor fluctuations may be construed as constant. FIG. 5 shows that applying the charging current Icharge (e.g., Icharge = I_{CC1}) to the battery causes an increase in a voltage of the battery V_{bat}.

The electronic device is configured to determine whether the voltage of the battery V_{bat} meets a first voltage reference value V_{CC1}. For example, the battery tolerates being charged with a higher current, such as at a constant charging current I_{charge} = I_{CC1} until the voltage of the battery V_{bat} meets the first voltage reference value V_{CC1} (e.g., V_{bat} = V_{CC1}). For example, determining that the voltage of the battery V_{bat} meets the first voltage reference value V_{CC1} can be seen as a condition to perform the first CV charging procedure CV₁ (e.g., to switch from the first CC charging procedure CC₁ to the first CV charging procedure CV1). In one or more example methods, determining that the voltage of the battery V_{bat} does not meet the first voltage reference value V_{CC1} can be seen as a condition to continue performing the first CC charging procedure CC₁. In the embodiment of FIG. 5, the battery is supplied with a charging current Icharge of 25 mA (e.g., Icharge = I_{CC1} = 25 mA) until the voltage of the battery V_{bat} reaches 4.05V (e.g., the V_{bat} = V_{CC1} = 4.05V).

The electronic device is configured to, upon determining that the voltage of the battery V_{bat} meets the first voltage reference value V_{CC1}, maintaining the voltage of the battery at the first voltage reference value V_{CC1} (e.g., the V_{bat} = V_{CC1}). The first electronic device maintains the voltage of the battery at the first voltage reference value V_{CC1} by controlling the charging current Icharge until the charging current meets the second current reference value I_{CC2} (e.g., Icharge = I_{CC2}). It is observed from FIG. 5 that the charging current Icharge gradually decreases until the charging current meets the second current reference value I_{CC2}.

For example, determining that the charging current I_{charge} meets the second current reference value I_{CC2} can be seen as a condition to initiate the second charging procedure. For example, that the charging current Icharge does not meet the second current reference value I_{CC2} can be seen as a condition to continue performing the first CV charging procedure CV₁.

The electronic device may be configured to perform the second CC charging procedure CC₂ when determining that the charging current Icharge meets the second current reference value Icc2. For example, determining that the charging current Icharge meets the second current reference value I_{CC2} can be seen as a condition to perform the second CC charging procedure CC2 (e.g., to switch from the first CV charging procedure CC₁ to the second CC charging procedure CC2).

The electronic device may be configured to, upon determining that the charging current I_{charge} meets the second current reference value I_{CC2} (e.g., I_{charge} = I_{CC2}), applying the charging current I_{charge}= I_{CC2} to the battery based on the second current reference value I_{CC2}. In one or more example methods, the charging current I_{charge} is constant. In other words, the charging current I_{charge} may be substantially constant and/or approximately constant. The charging current Icharge comprising minor fluctuations may be construed as constant. FIG. 5 shows that applying the charging current Icharge (e.g., Icharge = Icc2) to the battery causes an increase in the voltage of the battery V_{bat}.

The electronic device may be configured to determining whether the voltage of the battery V_{bat} meets the second voltage reference value V_{CC2}. For example, determining that the voltage of the battery V_{bat} does not meet the second voltage reference value V_{CC2} can be seen as a condition to continue performing the second CC charging procedure CC₂. For example, determining that the voltage of the battery V_{bat} meets the second voltage reference value V_{CV2} can be seen as a condition to perform the second CV charging procedure CV₂ (e.g., to switch from the second CC charging procedure CC₂ to the second CV charging procedure CV₂). The electronic device may be configured to, upon determining that the voltage of the battery V_{bat} meets the second voltage reference value V_{CV2}, maintaining the voltage of the battery V_{bat} at the second voltage reference value V_{CV2} (e.g., V_{bat} = V_{CV2}). The electronic device may be configured to perform the second CV charging procedure CV₂. Put differently, the voltage of the battery V_{bat} is allowed to rise with the charging current I_{charge}= I_{CC2} until the voltage of the battery V_{bat} reaches the second voltage reference value V_{CV2}. In the embodiment of FIG. 5, the voltage of the battery is allowed to rise with a charging current I_{charge} of 8 mA (e.g., I_{charge} - I_{CC2} = 8 mA) until the voltage of the battery V_{bat} reaches 4.2V (e.g., the V_{bat} = V_{CC2} = 4.2V).

For example, performing the second CV charging procedure CV₂ may comprise a gradual decrease in the charging current I_{charge} being supplied to the battery in relation to the second current reference value I_{CC2}. For example, the charging current I_{charge} gradually decreases in relation to the second current reference value I_{CC2} until the charging current I_{charge} meets a current termination value Iterm. In other words, the voltage of the battery V_{bat} may be maintained at V_{CV2} by gradually (e.g., smoothly) reducing the charging current I_{charge} until the charging current Icharge meets a current termination value Iterm. The battery may either be charged to its original full capacity or to its currently maximum capacity when the charging current Icharge (e.g., approximately) meets the current termination value Iterm.

For example, the first charging procedure can be seen as a fast-charging procedure. For example, the second charging procedure can be seen as a nominal charging procedure.

For example, the charging procedure is over when the charging current I_{charge} meets a current termination value Iterm. For example, the charging procedure illustrated by FIG. 5 results in a charging time of 110 minutes. A typical (e.g., classic) procedure to charge a battery of an electronic device is a CC-CV charging procedure. The CC-CV charging procedure comprises charging the battery at a constant charging current of e.g., 8 mA until the voltage of the battery reaches 4.2V, resulting in around 145 min of charging time. The difference between the charging procedure of the present application, e.g., a CC-CV-CC-CV charging procedure, and the classical charging procedure, e.g., a CC-CV charging procedure, can be calculated as (145-110)/145. The charging procedure of the present disclosure is 24% faster than the classical approach. Embodiments of the present disclosure allows charging a battery of an electronic device in a faster manner.

FIGS.5A-5B show graphs illustrating an example first charging procedure and an example second charging procedure for a pair of hearing aids. The battery of each of the pair of hearing aids is characterized by a battery model. The battery model of each of the pair of hearing aids is different from one another. The pair of hearing aids are of the same type (e.g., share the same structure).

The first hearing aid of the pair hearing aids comprises battery A. The second hearing aid of the pair of hearing aids comprises battery B.

Batteries A, B have different rated capacities and different maximum charging voltage (e.g., different maximum voltage values related to a manufacturer charging configuration).

FIGS. 5A-5B illustrate a CC-CV-CC-CV charging procedure for each of the pair of hearing aids. The first charging procedure comprises a first CC charging procedure and a first CV charging procedure. The second charging procedure comprises a second CC charging procedure and a second CV charging procedure. The first vertical axis 3001 represents a voltage (e.g., voltage of the battery) in V. The second vertical axis 3002 represents a charging current in mA as well as a charging capacity in mAh. The horizontal axis 3003 represents a charging time in minutes. For example, a charging time can indicate of a time required to charge a hearing aid for the day of use or at full capacity. A charging capacity (or a charge capacity) may provide for a measure on how much current a battery can provide over a specific time period without the need to be recharged.

Fig. 5A illustrates a CC-CV-CC-CV charging procedure for Battery A. Curve 3010 illustrates the variation of a voltage of a battery of the first hearing aid over the charging time, e.g., during the CC-CV-CC-CV charging procedure. Curve 3012 illustrates the variation of a charging current over the charging time, e.g., during the CC-CV-CC-CV charging procedure. Curve 3014 illustrates the variation of the charge capacity of battery A over the charging time, e.g., during the CC-CV-CC-CV charging procedure. Line 3016 illustrates a second target value, such as a second charge capacity target (in mAh). For example, a second energy target (in mWh) can also be used instead of the second charge capacity target (not shown in FIG. 5A). For example, the second target value can indicate an amount of charge or energy required by the first hearing aid to be fully charged. Line 3018 illustrates a first target value, such as a first charge capacity target (in mAh). For example, a first energy target (in mWh) can also be used instead of the first charge capacity target (not shown in FIG. 5A). For example, the first target value can indicate an amount of charge or energy required by the first hearing aid for a day of use.

Fig. 5B illustrates a CC-CV-CC-CV charging procedure for Battery B. Curve 3020 illustrates the variation of a voltage of a battery of the second hearing aid over the charging time, e.g., during the CC-CV-CC-CV charging procedure. Curve 3024 illustrates the variation of the charge capacity of battery B over the charging time, e.g., during the CC-CV-CC-CV charging procedure. Line 3026 illustrates a second target value, such as a second charge capacity target (in mAh). For example, a second energy target (in mWh) can also be used instead of the second charge capacity target (not shown in FIG. 5B). For example, the second target value can indicate an amount of charge or energy required by the second hearing aid to be fully charged. Line 3028 illustrates a first target value, such as a first charge capacity target (in mAh). For example, a first energy target (in mWh) can also be used instead of the first charge capacity target (not shown in FIG. 5B). For example, the first target value can indicate an amount of charge or energy required by the second hearing aid for a day of use.

FIG. 5C shows a graph illustrating charging capacity uniformity between the pair of hearing aids. FIG. 5C shows curves 3014, 3024 of graphs of FIGS. 5A-5B, respectively. Curves 3014, 3024 illustrate the charging capacity (e.g., or energy) over the charging time for batteries A and B, respectively.

In the embodiment of FIGS. 5A-5C, the first and second target voltages are the same for the first and second hearing aids.

FIG. 5C shows that charging currents and target charging voltages can be adjusted (via determination of the parameters of the charging configuration) in multiple steps, resulting in (e.g., almost) identical charge capacity or -energy over time among the hearing aids of the pair of hearing aids.

In other words, adjusting the first and second charging target voltages in a 2-step CC-CV charging procedure together with a proper selection of an initial charging configuration point (e.g., leading to determination of a first current reference value, and determination of the first voltage reference value and the second current reference value) may lead to similar charging capacities between the first and second hearing aids.

Embodiments of the present disclosure can enable charging uniformity between battery (cell) models of different vendors by tailoring charge profiles of the batteries using an initialization procedure for configuring the charge profiles of the batteries and using a n-step CC-CV charging procedure.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

1. A method for configuring a charging profile of a battery of each of a pair of hearing aids intended to be charged, wherein the battery of each of the pair of hearing aids is **characterized by** a battery model, the battery model of each of the pair of hearing aids being different from one another, and wherein each of the pair of hearing aids are of the same type, the method comprising:
- obtaining, for each of the pair of hearing aids, a charging configuration indicative of the charging profile of the respective battery, wherein the charging configuration comprises at least a first current reference value, a first voltage reference value, a first target value, and a second current reference value,
wherein obtaining the charging configuration comprises:
∘ determining an operating window comprising a plurality of initial charging configurating points associated with a coulombic efficiency greater than or equal to a threshold, each of the plurality of initial charging configuration points being indicative of a current value, a voltage value, and a temperature value,
wherein determining the operating window comprises performing, for the temperature value, an iterative charging and discharging procedure based on a maximum voltage value and a maximum current value,
∘ selecting an initial charging configuration point from the operating window based on a first target value and a charging time, wherein the first target value is indicative of an amount of charge or energy required by the respective hearing aid for a day of use, and wherein the charging time is indicative of a time required to charge the respective hearing aid for the day of use,
wherein the first current reference value is the current value of the selected initial charging configuration point,
∘ determining the first voltage reference value based on the first current reference value and the first target value, and
∘ determining the second current reference value based the maximum current value, wherein the operating window comprises the second current reference value; and
- performing, for each of the pair of hearing aids, a first charging procedure based on the respective charging configuration, wherein performing the first charging procedure comprises:
∘ applying a charging current to the battery of the respective hearing aid based on the first current reference value, wherein the charging current is constant, wherein applying the charging current to the battery of the respective hearing aid causes an increase in a voltage of the battery of the respective hearing aid;
∘ determining whether the voltage of the battery of the respective hearing aid meets the first voltage reference value; and
∘ upon determining that the voltage meets the first voltage reference value, maintaining the voltage of the battery of the respective hearing aid at the first voltage reference value by controlling the charging current until the charging current meets the second current reference value.

2. The method according to claim 1, wherein the charging configuration further comprises a second voltage reference value, and a second target value indicative of an amount of charge or energy required by the respective hearing aid to be fully charged, and wherein the method comprises performing, for each of the pair of hearing aids, a second charging procedure based on the charging configuration.

3. The method according to claim 2, wherein performing the second charging procedure comprises determining that the charging current meets the second current reference value.

4. The method according to any of claims 2-3, wherein performing the second charging procedure comprises, upon determining that the charging current meets the second current reference value, applying the charging current to the battery of the respective hearing aid based on the second current reference value, wherein the charging current is constant, wherein applying the charging current to the battery of the respective hearing aid causes an increase in the voltage of the battery.

5. The method according to any of claims 2-4, wherein performing the second charging procedure comprises determining whether the voltage meets the second voltage reference value.

6. The method according to any of claims 2-5, wherein performing the second charging procedure comprises, upon determining that the voltage meets the second voltage reference value, maintaining the voltage of the battery of the respective hearing aid at the second voltage reference value.

7. The method according to any of claims 2-6, wherein the method comprises determining the second voltage reference value based on the second target value, and storing the second voltage reference value in a memory of the respective hearing aid.

8. The method according to any of claims 2-7, wherein the charging configuration of each of the pair of hearing aids is associated with one or more of: the hearing aid type, the battery type, and the first target value, and the second target value of the respective battery.

9. The method according to any of claims 1-8, wherein the method comprises:
- obtaining a manufacturer charging configuration indicative of a manufacturer charging profile of the battery of the respective hearing aid, wherein the manufacturer charging configuration comprises the maximum voltage value and the maximum current value;
- determining a minimum voltage value based on the maximum voltage value;
- determining a plurality of voltage values based on the maximum and minimum voltage values;
- determining a minimum current value based on the maximum current value; and
- determining a plurality of current values based on the maximum and minimum current values.

10. The method according to claim 9, wherein performing the iterative charging and discharging procedure comprises:
- setting an auxiliar voltage value to the minimum voltage value;
- setting an auxiliary current value to the minimum voltage value;
- iteratively performing, for each current value of the plurality of current values, the following steps until the auxiliar voltage value meets the maximum voltage value:
∘ determining a charging capacity of the respective battery by applying a charging current to the respective battery based on the respective current value until the voltage of the battery meets the auxiliar voltage value;
∘ determining a discharging capacity of the respective battery by applying a discharging current to the respective battery until the voltage of the battery meets a shutdown voltage;
∘ determining the coulombic efficiency based on the charging and discharging capacities of the respective battery; and
∘ determining whether the coulombic efficiency is greater than or equal to the threshold.

11. The method according to claim 10, wherein determining whether the coulombic efficiency is greater than or equal to the threshold comprises:
- determining that the coulombic efficiency is greater than or equal to the threshold;
- upon determining that the coulombic efficiency is greater than or equal to the threshold,
∘ storing the current value, the auxiliar voltage value, and the temperature value in form of an initial charging configurating point in the memory the respective hearing aid and/or an auxiliary device, and
∘ determining whether the auxiliar voltage value is less than the maximum voltage value, wherein determining whether the auxiliar voltage value is less than the maximum voltage value comprises:
▪ determining that the auxiliar voltage value is less than the maximum voltage value, and
▪ upon determining that the auxiliar voltage value is less than the maximum voltage value, setting the auxiliar voltage value to the following voltage value of the plurality of voltage values.

12. The method according to claim 10, wherein determining whether the coulombic efficiency is greater than or equal to the threshold comprises:
- determining that the coulombic efficiency less than the threshold; and
- upon determining that the coulombic efficiency is less than the threshold,
∘ determining whether the auxiliar current value is less than the maximum current value, wherein determining whether the auxiliar current value is less than the maximum current value comprises:
▪ determining that the auxiliar current value is less than the maximum current value, and
▪ upon determining that the auxiliar current value is less than the maximum current value, setting the auxiliar current value to the following current value of the plurality of current values.

13. The method according to any of claims 1-12, wherein determining the first voltage reference value comprises determining a voltage value corresponding to the first target when applying a charging current based on the first current reference value to the battery of the respective hearing aid.

14. A computer program comprising instructions which, when the program is executed by a computer, cause the computer to carry out the steps of the method of any one of claims 1-13.

15. A hearing system comprising a pair of hearing aids of the same type, a charging device, and an auxiliary device, wherein the battery of the each of the pair of hearing aids is **characterized by** a battery model, the battery model of each of the pair of hearing aids being different from one another, and wherein the auxiliary device comprises:
- an interface configured to:
∘ obtain a temperature value, and
∘ provide, to each of the pair of hearing aids, a charging configuration indicative of the charging profile of a respective battery of each of the pair of hearing aids, wherein the charging configuration comprises at least a first current reference value, a first voltage reference value, a first target value, and a second current reference value;
- a processor configured to:
∘ determine an operating window comprising a plurality of initial charging configurating points associated with a coulombic efficiency greater than or equal to a threshold, each of the plurality of initial charging configuration points being indicative of a current value, a voltage value, and the temperature value,
wherein determining the operating window comprises performing, for the temperature value, an iterative charging and discharging procedure based on a maximum voltage value and a maximum current value,
∘ select an initial charging configuration point from the operating window based on a first target value and a charging time, wherein the first target value is indicative of an amount of charge or energy required by the respective hearing aid for a day of use, and wherein the charging time is indicative of a time required to charge the respective hearing aid for the day of use,
wherein the first current reference value is the current value of the selected initial charging configuration point,
∘ determine a first voltage reference value based on the first current reference value and the first target value, and
∘ determining the second current reference value based the maximum current value, wherein the operating window comprises the second current reference value; and
- a memory configured to store one or more of: the plurality of initial charging configurating points, the selected initial charging configuration point, and the charging configuration;
wherein the charging device is configured to operate as a power supply in respect to each of the pair of hearing aids;
and wherein each of the pair of hearing aids comprises:
- an input unit configured to receive an acoustical signal and convert the acoustical signal into an input signal;
- a processing unit configured to process the input signal with a hearing loss profile of the user;
- an output unit configured to emit the processed signal with the hearing loss profile into the ear of the user; and
- the battery,
wherein the input unit is configured to receive, from the auxiliary device, the charging configuration, and wherein the processing unit is configured to:
- perform a first charging procedure based on the received charging configuration, wherein performing the first charging procedure comprises:
∘ applying a charging current to the battery of the respective hearing aid based on the first current reference value, wherein the charging current is constant, wherein applying the charging current to the battery of the respective hearing aid causes an increase in a voltage of the battery of the respective hearing aid;
∘ determining whether the voltage of the battery of the respective hearing aid meets the first voltage reference value, and
∘ upon determining that the voltage meets the first voltage reference value, maintaining the voltage of the battery of the respective hearing aid at the first voltage reference value by controlling the charging current until the charging current meets the second current reference value.
